(19) **Europäisches Patentamt**
**European Patent Office**
**Office européen des brevets**

(11) **EP 4 495 907 A1**

(12) **EUROPEAN PATENT APPLICATION**
published in accordance with Art. 153(4) EPC

(43) Date of publication:
**22.01.2025 Bulletin 2025/04**

(21) Application number: **22932127.8**

(22) Date of filing: **17.03.2022**

(51) International Patent Classification (IPC):
*G08G 1/00* (2006.01)

(52) Cooperative Patent Classification (CPC):
G08G 1/00

(86) International application number:
**PCT/JP2022/012382**

(87) International publication number:
**WO 2023/175853 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi, Ltd.**
**Tokyo 100-8280 (JP)**

(72) Inventors:
• MINAKAWA, Tsuyoshi
Tokyo 100-8280 (JP)
• ADACHI, Shingo
Tokyo 100-8280 (JP)
• HASEGAWA, Yohei
Tokyo 100-8280 (JP)
• TOMIYAMA, Tomoe
Tokyo 100-8280 (JP)
• YONEHARA, Miki
Tokyo 100-8280 (JP)
• KIMURA, Keiji
Tokyo 100-8280 (JP)

(74) Representative: **Mewburn Ellis LLP**
**Aurora Building**
**Counterslip**
**Bristol BS1 6BX (GB)**

(54) **OPERATION PLAN CREATION SYSTEM, TRANSPORTATION SERVICE COOPERATION SYSTEM, OPERATION PLAN CREATION METHOD, AND OPERATION PLAN CREATION PROGRAM**

(57) To create an operation plan for enabling appropriate cooperation between traffic services while considering circumstances of each of a plurality of traffic service providers. The operation plan creation system 50 creates, based on a travel demand, an individual demand that is information on travel of a traveler to be transported by each transportation mode in each section constituting a travel route of the traveler; calculates, for each transportation mode, a service level of a transportation service in each section for the traveler to be transported by the transportation mode based on the individual demand; creates proposal request information including the service level for each transportation mode; transmits the proposal request information to an information processing device related to the transportation mode; receives proposal information that is response information to the proposal request information from the information processing device, creates a transportation (service) assignment plan that is information on a service level in each section and that satisfies a service level indicated by the proposal information for each transportation mode; and transmits the created transportation (service) assignment plan to an information processing device related to the transportation (service) assignment plan.

[FIG. 2]

**Description**

BACKGROUND

Technical Field

The present invention relates to an operation plan creation system, a traffic service cooperation system, an operation plan creation method, and an operation plan creation program.

Background Art

In recent years, in view of environmental considerations, attempts have been made to prompt a shift (modal shift) from private vehicles to public transportation. As part of this trend, the idea of a mobility hub that provides various traffic services starting from a train station, a bus stop, and the like is attracting attention.

The key to the idea of mobility hub is to construct a public traffic service network in which a plurality of traffic services efficiently cooperate with one another. At the same time, it is also important to ensure autonomy of each traffic service provider.

In this regard, as a technique of improving both operation efficiency of a traffic facility and a satisfaction level of a customer who is a user of the traffic facility, PTL 1 discloses an operation system of a traffic facility that operates a vehicle for carrying a boarding passenger in a section where there are many boarding passengers in a predetermined time period, and the operation system includes a request reception unit that receives, from the boarding passenger, an input of desired boarding information including at least a desired boarding time, a desired boarding point, a desired alighting point, a vehicle operation planning unit that formulates, based on the desired boarding information input to the request reception unit, a vehicle operation plan including at least a stop place and a scheduled operation time so that a vehicle arrives at the desired boarding point by the desired boarding time, and a boarding passenger assignment unit that assigns boarding passengers to the vehicle operation plan formulated by the vehicle operation planning unit.

Citation List

Patent Literature

PTL 1: JP2002-269671A

SUMMARY OF INVENTION

Technical Problem

However, the technique disclosed in PTL 1 can basically target only one traffic service provider. In addition, the traffic service provider has limited discretion, and provision of an appropriate operation plan to the traffic service provider is not ensured.

The present invention has been made in view of such a background, and has as an object to provide an operation plan creation system, a traffic service cooperation system, an operation plan creation method, and an operation plan creation program capable of creating an operation plan for enabling appropriate cooperation among traffic services while considering circumstances of each of a plurality of traffic service providers.

Solution to Problem

In order to solve the above problems, according to one aspect of the invention, an operation plan creation system that transmits information to and receives information from a plurality of traffic management systems is provided. The operation plan creation system includes a storage unit configured to store a travel demand including information on a departure point and a destination of a traveler, and an arithmetic processing unit configured to execute individual demand estimation processing of creating, based on the travel demand, an individual demand of the traveler who travels using at least one transportation mode of transportation modes of a plurality of traffic services, the individual demand being information on travel of the traveler to be transported by the transportation mode in each section of one or a plurality of sections constituting a travel route from the departure point to the destination; proposal request processing of calculating, based on the created individual demand, a service level for each of the transportation modes, the service level being an evaluation value of a transportation service in each of the sections provided by the transportation mode, creating proposal request information that is information including the calculated service level for each of the transportation modes, and transmitting the created proposal request information to an information processing device associated with the transportation mode; proposal reception processing of receiving, from the information processing device, proposal information that is service level response information to the proposal request information, transportation (service) assignment plan creation processing of creating, for each of the transportation modes, a transportation (service) assignment plan that is information on a service level in each of the sections provided by the transportation mode and that satisfies a service level indicated by the received proposal information; and assignment result transmission processing of transmitting the created transportation (service) assignment plan to the information processing device associated with the transportation mode related to the transportation (service) assignment plan.

Advantageous Effects of Invention

According to the invention, it is possible to create an operation plan for enabling appropriate cooperation among traffic services while considering circumstances of each of a plurality of traffic service providers.

Configurations, effects, and the like other than those described above will become apparent in the following description of an embodiment.

BRIEF DESCRIPTION OF DRAWINGS

[FIG. 1] FIG. 1 is a diagram illustrating an example of a configuration of a traffic service cooperation system according to an embodiment.
[FIG. 2] FIG. 2 is a diagram illustrating an example of hardware and program provided in an operation plan creation system.
[FIG. 3] FIG. 3 is a diagram illustrating an example of traffic service cooperation processing executed by the traffic service cooperation system.
[FIG. 4] FIG. 4 is a diagram illustrating an example of first proposal request information.
[FIG. 5] FIG. 5 is a diagram illustrating an example of second proposal request information.
[FIG. 6] FIG. 6 is a diagram illustrating an example of third proposal request information.
[FIG. 7] FIG. 7 is a diagram illustrating an example of first proposal information.
[FIG. 8] FIG. 8 is a diagram illustrating an example of second proposal information.
[FIG. 9] FIG. 9 is a diagram illustrating an example of third proposal information.
[FIG. 10] FIG. 10 is a diagram illustrating an example of first adoption information.
[FIG. 11] FIG. 11 is a diagram illustrating an example of second adoption information.
[FIG. 12] FIG. 12 is a diagram illustrating an example of third adoption information.
[FIG. 13] FIG. 13 is a flowchart illustrating details of operation plan creation processing.
[FIG. 14] FIG. 14 is a flowchart illustrating details of individual demand estimation processing.
[FIG. 15] FIG. 15 is a diagram illustrating an example of a passenger behavior model.
[FIG. 16] FIG. 16 is a flowchart illustrating details of proposal request processing.
[FIG. 17] FIG. 17 is a flowchart illustrating details of a transportation (service) assignment plan creation processing.
[FIG. 18] FIG. 18 is a diagram illustrating an example of a matrix used to create an objective function and a constraint of a mixed integer programming problem.

DESCRIPTION OF EMBODIMENTS

Hereinafter, embodiments of the invention will be described with reference to the drawings.

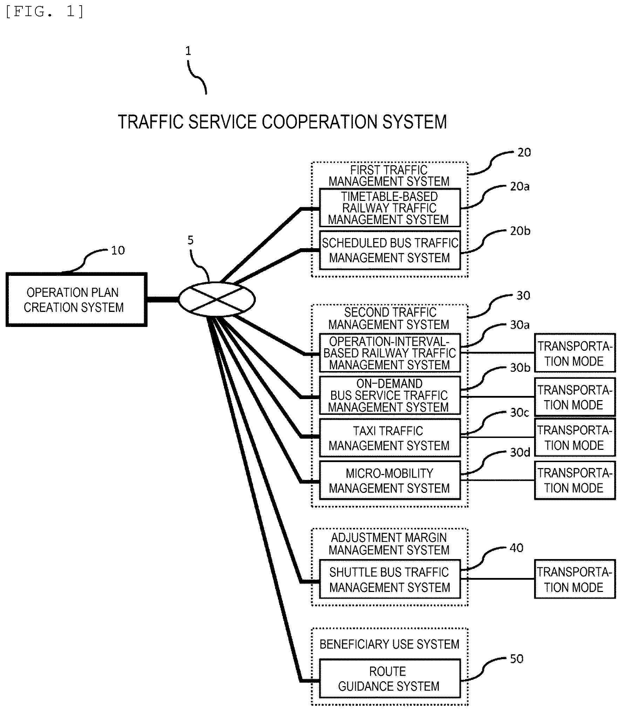

FIG. 1 is a diagram illustrating an example of a configuration of a traffic service cooperation system 1 according to the present embodiment. The traffic service cooperation system 1 includes an operation plan creation system 10, a first traffic management system 20, a second traffic management system 30, an adjustment margin management system (a shuttle bus traffic management system 40), and a beneficiary use system (a route guidance system 50). These information processing systems are communicably connected by a wired or wireless communication network 5 such as the Internet, a local area network (LAN), a wide area network (WAN), or a dedicated line.
The first traffic management system 20 is an information processing system including one or more information processing devices managed by a provider that operates each transportation mode according to a predetermined operation plan, such as railway or a scheduled bus that operates based on a timetable. The first traffic management system 20 transmits information on an operation plan of each transportation mode to the operation plan creation system 10 based on information managed by the first traffic management system 20. In the present embodiment, the first traffic management system 20 includes a timetable-based railway traffic management system 20a that is a system of a railway provider and a scheduled bus traffic management system 20b that is a system of a scheduled bus provider.

The second traffic management system 30 is an information processing system including one or more information processing devices managed by a provider that operates each transportation mode according to a method other than a predetermined operation plan (an operation schedule), such as railway, an on-demand bus service, a taxi, or micro-mobility that operates based on a predetermined operation interval. In the present embodiment, the second traffic management system 30 includes an operation-interval-based railway traffic management system 30a that is a system of a railway provider that operates based on a predetermined operation interval, an on-demand bus service traffic management system 30b that is a system of an on-demand bus service provider, a taxi traffic management system 30c that is a system of a taxi provider, and a micro-mobility management system 30d that is a system of a micro-mobility provider.

The adjustment margin management system is an information processing system including one or more information processing devices managed by a traffic service provider other than the first traffic management system 20 and the second traffic management system 30. That is, the adjustment margin management system is managed by a provider (the provider may be common to the first traffic management system 20 or the second traffic management system 30) that provides a supplementary transportation mode (hereinafter, referred to as an adjustment margin) other than the first traffic management system 20 and the second traffic management system 30. In the present embodiment, the adjustment margin management system is the shuttle bus traffic management system 40 managed by a shuttle bus provider.

The beneficiary use system is an information processing system including one or more information processing devices for a passenger (a traveler) who uses a traffic service provided by each provider. In the present embodiment, the beneficiary use system is the route guidance system 50 that searches for a travel route along which a traveler is transported by a transportation mode of each provider from a departure point to a destination, provides information to the traveler, and accumulates the information. The route guidance system 50 provides the operation plan creation system 10 with information related to travel of the traveler, such as search contents of a route, and is provided with transportation (service) assignment information to be described later from the operation plan creation system 10, so that the route guidance system 50 can avoid a risk such as "a route including a taxi is provided but there is no taxi available" and reliability of the route guidance system 50 itself is improved.

The operation plan creation system 10 is an information processing system including one or more information processing devices. The operation plan creation system 10 inquires of the second traffic management system 30 about a possibility of providing a transportation mode that is in short supply considering a traffic service related to the first traffic management system 20 as a base transportation capacity. According to an inquiry result, the operation plan creation system 10 cooperates with the second traffic management system 30 to provide a necessary traffic service to a traveler together with the adjustment margin management system (the shuttle bus traffic management system 40) as needed.

In the present embodiment, each information processing system of the second traffic management system 30 and each information processing system of the adjustment margin management system includes a predetermined control unit that controls each transportation mode (for example, controls traveling of a vehicle or an operation facility) based on provision contents of a transportation mode (hereinafter, referred to as adoption information; details will be described later) requested from the operation plan creation system 10.

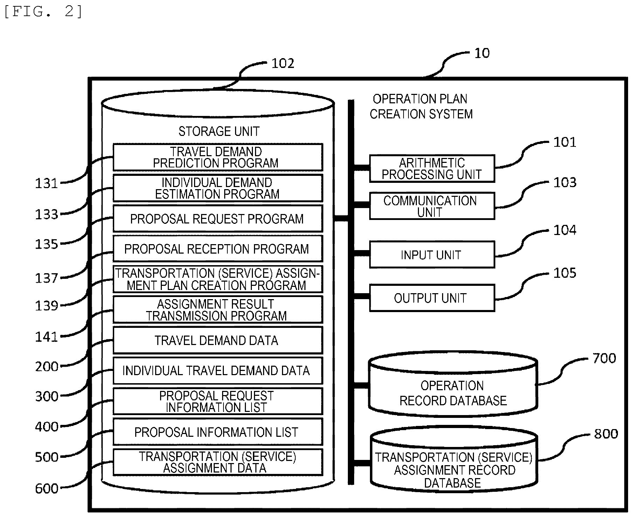

Next, FIG. 2 is a diagram illustrating an example of hardware and programs provided in the operation plan creation system 10.

The operation plan creation system 10 includes an arithmetic processing unit 101 (a processor) such as a central processing unit (CPU), a digital signal processor (DSP), a graphics processing unit (GPU), and a field-programmable gate array (FPGA); a storage unit 102 (a memory, a storage device) such as a read only memory (ROM), a random access memory (RAM), a hard disk drive (HDD) or a solid state drive (SSD); a communication unit 103 implemented by a network interface card (Noyob IC), a wireless communication module, a universal serial interface (USB) module, a serial communication module, and the like; an input unit 104 implemented by a mouse, a keyboard, and the like; and an output unit 105 implemented by a liquid crystal display, an organic electro-luminescence (EL) display, or the like. The first traffic management system 20, the second traffic management system 30, the shuttle bus traffic management system 40, and the route guidance system 50 also have the same hardware configuration.

The operation plan creation system 10 stores various programs such as a travel demand prediction program 131, an individual demand estimation program 133, a proposal request program 135, a proposal reception program 137, a transportation (service) assignment plan creation program 139, and an assignment result transmission program 141.

The travel demand prediction program 131 is a program for predicting a travel demand, which is information including information on a departure point and a destination of a traveler (an agent) and a departure time period.

The individual demand estimation program 133 is a program for creating, based on a travel demand, an individual demand, which is information indicating an amount of a travel demand of a traveler to be transported by each transportation mode in each section constituting a travel route from a departure point to a destination of the traveler. The traveler in this case is not an individual traveler but refers to all travelers.

The proposal request program 135 is a program for calculating, for a transportation mode, an expected service level of each transportation mode based on the individual demand created using the individual demand estimation program 133, creating proposal request information including the calculated service level for each transportation mode, and transmitting the created proposal request information to the second traffic management system 30 associated with the transportation mode.

The proposal reception program 137 is a program for receiving, from each second traffic management system 30, proposal information, which is service level response information to the proposal request information.

The transportation (service) assignment plan creation program 139 is a program for creating, for each transportation mode, a transportation (service) assignment plan that is information on a service level in each section and satisfies a service level indicated by the proposal information received using the proposal reception program 137.

The assignment result transmission program 141 is a program for transmitting the transportation (service) assignment plan created using the transportation (service) assignment plan creation program 139 to the second traffic management system 30 associated with a transportation mode related to the transportation (service) assignment plan.

The operation plan creation system 10 stores data such as travel demand data 200, individual travel demand data 300, a proposal request information list 400, a proposal information list 500, transportation (service) assignment data 600, an operation record database 700, and a transportation (service) assignment record database 800.

The travel demand data 200 is a set of travel demands, which is information including (a group of) travelers, a departure point and a final destination of a traveler, and a departure time period. The travel demand data 200 is predicted and updated using the travel demand prediction program 131 based on information acquired as needed from a predetermined device, a database, or the like (the first traffic management system 20 or the route guidance system 50 may be used). In general, there are a plurality of routes for travel from a departure point to a destination, and a plurality of traffic services can be used for travel along each route. In the present embodiment, a route is handled by dividing the route into one or more sections with a transfer point as a boundary for using different traffic services, and a transportation mode related to any one of the traffic services is used in each section. For example, from one bus stop to another bus stop, a person can travel by a bus, and when a person can travel by a taxi, a route along which a person travel by a bus and a route along which a person travel by a taxi are handled as different routes.

The individual travel demand data 300 is information in which a travel demand is broken down for each transportation mode (hereinafter, referred to as an individual demand). That is, the individual demand is information including (a group of) travelers, a section (a route) from a departure point to a destination, a transportation mode (a transportation mode is distinguished for each service in the present embodiment) used to travel in the section, and a time period of the travel. A start point and an end point of each section are any of a departure point, a stopover point, a transfer point, and a final destination of a traveler.

The proposal request information list 400 includes proposal request information (first proposal request information 410, second proposal request information 430, and third proposal request information 450) to be described later. The proposal request information is information for requesting a provider to propose a transportation service that can be provided by the provider, which is expressed using an evaluation value (a service level) of the transportation service of each transportation mode. The proposal request information includes information on a transportation service that the operation plan creation system 10 desires to provide to a provider, such as a provision area of a transportation mode, so that the proposal request information becomes a reference when a provider creates a proposal.

The service level is, for example, an evaluation value related to each evaluation item in a traffic service, such as a provision area of a transportation mode, a provision time period of a transportation mode (information in which a reference provision time and a degree of error are paired, or a time range including a provision time), and the number of transported passengers of a transportation mode. A service level agreed between a management provider of the operation plan creation system 10 and each provider that provides a traffic service is referred to as a service level agreement (SLA), and each provider is required to guarantee compliance with the SLA. On the other hand, a service level that is not agreed between the management provider of the operation plan creation system 10 and each provider that provides a traffic service is reference information when each provider provides a traffic service. With respect to the service level that is not agreed, for example, even when the operation plan creation system 10 presents a recommended value, the provider does not need to guarantee compliance with the service level.

The proposal information list 500 includes proposal information (first proposal information, second proposal request information, and third proposal request information) to be described later. The proposal information is information indicating proposal contents related to a service level of a traffic service that can be provided by a provider, which is a response of each provider to the proposal request information.

The transportation (service) assignment data 600 is information on a transportation service of each transportation mode (hereinafter, referred to as a transportation (service) assignment plan), which is required for each provider and generated in response to a service level indicated by the proposal information from each provider. Contents of the transportation (service) assignment data 600 are provided to each provider as response information (adoption information) of a service level to the proposal information.

The operation record database 700 accumulates information received from the second traffic management system 30. The operation plan creation system 10 can evaluate how much the second traffic management system 30 conforms to a service level agreed with the operation plan creation system 10 by collating the information accumulated in the operation record database 700 with information accumulated in the transportation (service) assignment record database 800.

The transportation (service) assignment record database 800 accumulates a set of evaluation indexes related to the proposal request information, the proposal information, a transportation (service) assignment result, and a service level guaranteed by the operation plan creation system 10.

The programs described above are executed by the operation plan creation system 10 by the arithmetic processing unit 101 reading the programs from the storage unit 102. The programs can be recorded on, for example, a recording medium and distributed. A part of or the entire operation plan creation system 10 may be implemented using a virtual information processing resource provided by using a virtualization technique, a process space separation technique, or the like, such as a virtual server provided by a cloud system. All or a part of functions provided by the operation plan creation system 10 may be implemented by, for example, a service provided by a cloud system via an application programming interface (API) or the like.

Next, processing executed by the traffic service cooperation system 1 will be described.

Traffic Service Cooperation Processing

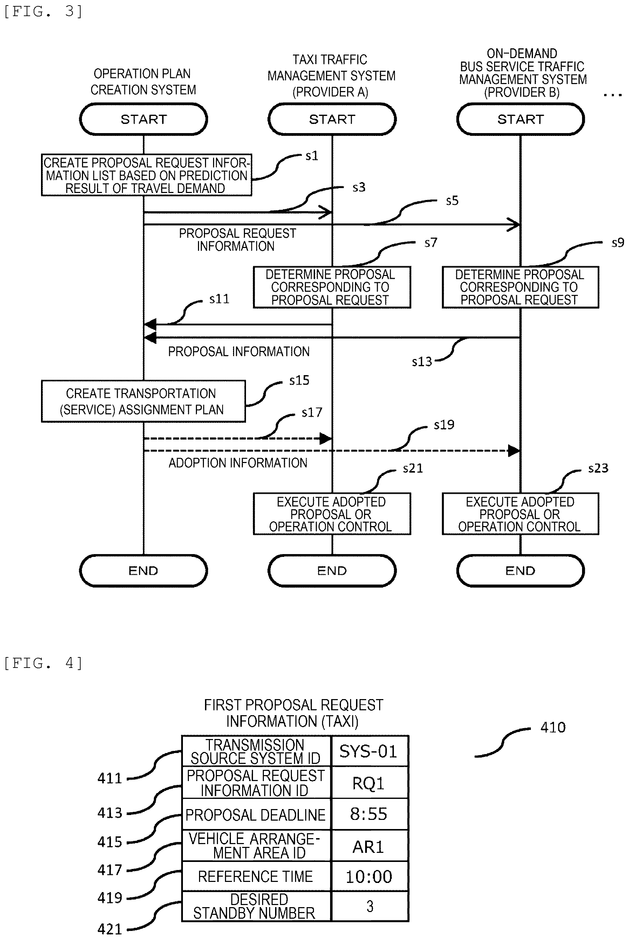

FIG. 3 is a diagram illustrating an example of traffic service cooperation processing executed by the traffic service cooperation system 1. The traffic service cooperation processing is executed, for example, at a predetermined timing (for example, a predetermined time or a predetermined time interval) or when a user performs a predetermined input to the operation plan creation system 10. The traffic service cooperation processing may be executed, for example, in response to an input of operation plan change information from the first traffic management system 20 when an event in which a travel demand greatly changes occurs, such as when an operation disturbance occurs in a railway or a scheduled bus.

First, based on the travel demand data 200, the operation plan creation system 10 creates the proposal request information list 400 that is a list of proposal request information used when the second traffic management system 30 related to each provider is requested to propose a traffic service that can be provided by the provider (s1).

Then, the operation plan creation system 10 transmits the created proposal request information in the created proposal request information list 400 to the second traffic management system 30 related to each provider (s3 and s5).

Here, details of the proposal request information will be described.

(First Proposal Request Information)

FIG. 4 is a diagram illustrating an example of the first proposal request information 410. The first proposal request information 410 includes various kinds of information of a transmission source system ID 411 for setting identification information of the operation plan creation system 10 that is a transmission source of the first proposal request information 410, a proposal request information ID 413 for setting identification information of the first proposal request information 410, a proposal deadline 415 for setting a response deadline to a proposal indicated by the first proposal request information 410, a vehicle arrangement area ID 417 for setting an arrangement area of a transportation mode desired to be provided, a reference time 419 for setting a time of the arrangement, and a desired standby number 421 for setting the number of transportation modes desired to be provided. The vehicle arrangement area ID 417, the reference time 419, and the desired standby number 421 indicate a service level serving as reference information. The first proposal request information 410 is, for example, information to be transmitted to the second traffic management system 30 managed by each taxi provider. In the case of the example illustrated in FIG. 4, the first proposal request information 410 indicates to a taxi provider that "It is desired to arrange 3 taxis in an area of AR1 at 10:00. If possible, please propose a service level that can be provided. The proposal deadline is 8:55". An arrangement area corresponding to each vehicle arrangement area ID may be, for example, a "point" such as a taxi stand at a predetermined station, or may be a broader range such as a designated block. A correspondence relationship between the vehicle arrangement area ID and the arrangement area is defined in advance and is shared between the operation plan creation system 10 and the second traffic management system 30.

(Second Proposal Request Information)

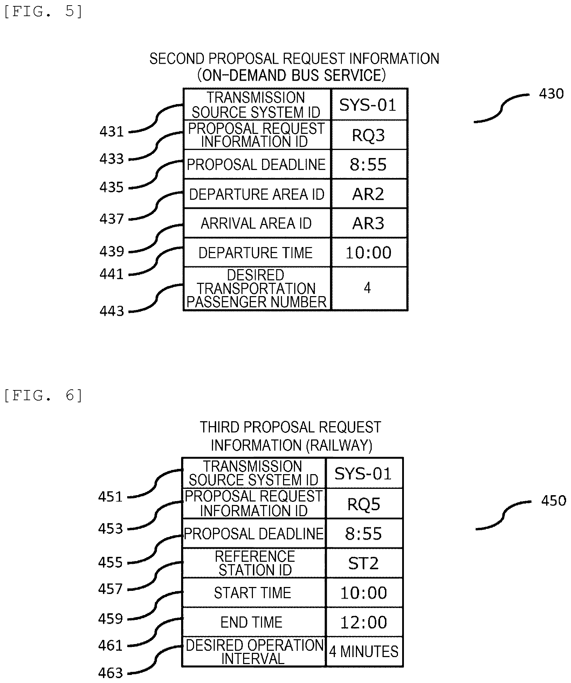

FIG. 5 is a diagram illustrating an example of the second proposal request information 430. The second proposal request information 430 includes various kinds of information of a transmission source system ID 431 for setting identification information of the operation plan creation system 10 that is a transmission source of the second proposal request information 430, a proposal request information ID 433 for setting identification information of the second proposal request information 430, a proposal deadline 435 for setting a response deadline to a proposal indicated by the second proposal request information 430, a departure area ID 437 for setting a departure area of a transportation mode (a departure area of a transportation mode) desired to be provided, an arrival area ID 439 for setting an arrival area of the transportation mode desired to be provided, a departure time 441 for setting a departure time at the departure area for the transportation mode desired to be provided, and a desired transportation passenger number 443 for setting the number of transportation passengers to be transported by the transportation mode desired to be provided. The departure area ID 437, the arrival area ID 439, the departure time 441, and the desired transportation passenger number 443 indicate a service level serving as reference information. The second proposal request information 430 is, for example, information to be transmitted to the second traffic management system 30 managed by each on-demand bus service provider. In the case of the example illustrated in FIG. 5, the second proposal request information 430 indicates to an on-demand bus service provider that "It is desired to provide a transportation mode that departs from an area of AR2 at 10:00 to an area of AR3 and can transport 4 passengers. If possible, please propose a service level that can be provided. The proposal deadline is 8:55". An area corresponding to an area ID set in the departure area ID 437 or the arrival area ID 439 may be, for example, a "point" such as a predetermined bus stop, or may be a broader range such as a designated block. A correspondence relationship between the area ID and a specific area is defined in advance and is shared between the operation plan creation system 10 and the second traffic management system 30.

(Third Proposal Request Information)

FIG. 6 is a diagram illustrating an example of the third proposal request information 450. The third proposal request information 450 includes various kinds of information of a transmission source system ID 451 for setting identification information of the operation plan creation system 10 that is a transmission source of the third proposal request information 450, a proposal request information ID 453 for setting identification information of the third proposal request information 450, a proposal deadline 455 for setting a response deadline to a proposal indicated by the third proposal request information 450, a reference station ID 457 for setting a station serving as a reference for adjusting an operation interval of a transportation mode, a start time 459 for setting a start time of a time period in which an operation interval of a transportation mode is adjusted, an end time 461 for setting an end time of the time period in which the operation interval of the transportation mode is adjusted, and a desired operation interval 463 for setting an operation interval of a transportation mode desired to be provided. The reference station ID 457, the start time 459, the end time 461, and the desired operation interval 463 are information indicating a service level. The third proposal request information 450 is, for example, information to be transmitted to the second traffic management system 30 of a railway provider operated based on an operation interval. In case of the example illustrated in FIG. 6, the third proposal request information 450 indicates to a railway provider that "It is desired to set an operation interval of a train from 10:00 to 12:00 at a station of ST2 to 4 minutes. If possible, please propose a service level that can be provided. The proposal deadline is 8:55".

Next, as illustrated in FIG. 3, the second traffic management system 30 that received the proposal request information creates proposal information corresponding to the proposal request information (s7 and s9). The second traffic management system 30 may receive an input of various types of information from a user and set the input information as proposal information, or may automatically create proposal information according to a predetermined algorithm. When it is difficult to provide a transportation mode close to contents desired in the proposal request information, it is not always necessary to create the proposal information.

In this case, the second traffic management system 30 can transmit a plurality of pieces of proposal information in response to the proposal request information received from the operation plan creation system 10. In this case, the second traffic management system 30 sets exclusive information to be described later in the proposal information. The operation plan creation system 10 creates an operation plan so that sets of proposal information set to be exclusive are not selected at the same time.

The second traffic management system 30 may create one piece of proposal information for a plurality of pieces of proposal request information and transmit the proposal information to the operation plan creation system 10. In this case, the second traffic management system 30 sets comprehensive proposal information to be described later in the proposal information.

Then, the second traffic management systems 30 transmits the created proposal information to the operation plan creation system 10 (s11 and s13).

Here, details of the proposal information will be described.

(First Proposal Information)

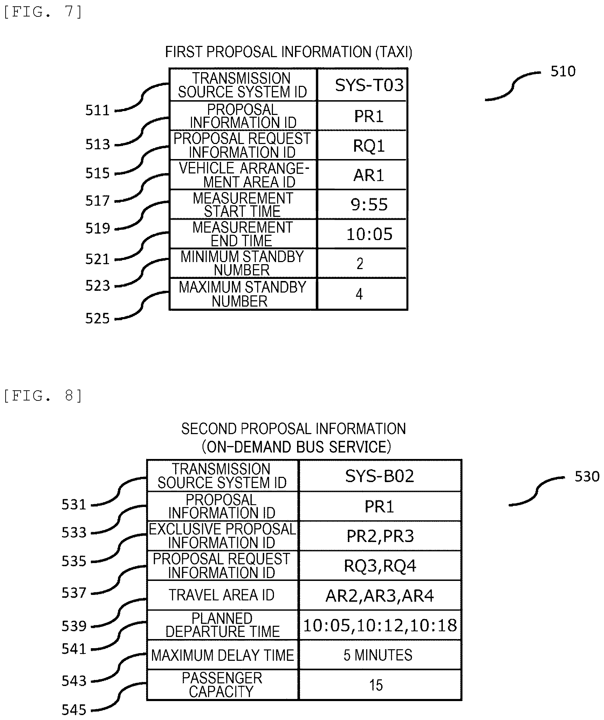

FIG. 7 is a diagram illustrating an example of first proposal information 510. The first proposal information 510 includes various kinds of information of a transmission source system ID 511 for setting identification information of the second traffic management system 30 that is a transmission source of the first proposal information 510, a proposal information ID 513 for setting identification information of the first proposal information 510, and a proposal request information ID 515 for setting identification information of the first proposal request information 410 corresponding to the first proposal information 510, a vehicle arrangement area ID 517 for setting an arrangement area (an area wider than an area indicated by the vehicle arrangement area ID 417 or an area close to the area indicated by the vehicle arrangement area ID 417) where a transportation mode can be arranged in response to the vehicle arrangement area ID 417 in the first proposal request information 410, a measurement start time 519 for setting a start time (a measurement start time) of a vehicle arrangement time period in response to the reference time 419 in the first proposal request information 410, a measurement end time 521 for setting an end time (a measurement end time) of the vehicle arrangement time period in response to the reference time 419 in the first proposal request information 410, a minimum standby number 523 for setting a minimum number of transportation modes that can be in standby in response to the desired standby number 421 in the first proposal request information 410, and a maximum standby number 525 for setting a maximum number of transportation modes that can be in standby in response to the desired standby number 421 in the first proposal request information 410. In the case of the example shown in FIG. 7, the first proposal information 510 indicates to the operation plan creation system 10 that "In an area of AR1 in a time period from 9:55 to 10:05, two taxis at minimum can be arranged and four taxis at maximum can be arranged". In the information, information "two taxis at minimum can be arranged in the area of AR1 in the time period from 9:55 to 10:05" is a service level that can be agreed on by a traffic provider, and information "four taxis at maximum can be arranged in the area of AR1 in the time period from 9:55 to 10:05" is reference information.

(Second Proposal Information)

FIG. 8 is a diagram illustrating an example of second proposal information 530. The second proposal information 530 includes various kinds of information of a transmission source system ID 531 for setting identification information of the second traffic management system 30 that is a transmission source of the second proposal information 530, a proposal information ID 533 for setting identification information of the second proposal information 530, an exclusive proposal information ID 535 for setting an identification information list (that is, exclusive information) of the second proposal information 530 other than the second proposal information 530 that cannot be selected at the same time with the second proposal information 530, a proposal request information ID 537 for setting identification information of the second proposal request information 430 corresponding to the second proposal information 530 (when the second proposal information 530 is proposal information for a plurality of pieces of the second proposal request information 430 from the operation plan creation system 10, a list of identification information of the plurality of pieces of second proposal request information 430, that is, the comprehensive proposal information is set), a travel area ID 539 (may extend over a plurality of areas) for setting a travel area of a transportation mode that can be provided in response to the departure area ID 437 and the arrival area ID 439 in the second proposal request information 430, a planned departure time 541 for setting a departure time from the travel area on a travel route of the transportation mode in response to the departure time 441 in the second proposal request information 430, a maximum delay time 543 for setting a maximum delay time of the transportation mode with respect to the planned departure time 541 in response to the departure time 441 in the second proposal request information 430, and a passenger capacity 545 for setting a passenger capacity of the transportation mode in response to the desired transportation passenger number 443 in the second proposal request information 430. In case of the example illustrated in FIG. 8, the second proposal information 530 indicates to the operation plan creation system 10 that "In response to the proposal request information of RQ3 and RQ4, it is possible to provide one or more on-demand bus services that travel from an area of AR2 to an area of AR4 via an area of AR3. The maximum number of passengers that can be carried is 15, planned departure times from AR2, AR3, and AR4 are respectively 10:05, 10:12, and 10:18, and a maximum delay time is expected to be no more than 5 minutes. In addition to this proposal, there are proposals specified by proposal information IDs of PR2 and PR3 in response to RQ3, RQ4, or other proposal request information, but these proposals are based on a premise that when PR1 is adopted, PR2 and PR3 will not be adopted (it is not mentioned whether both proposals of PR2 and PR3 can be adopted when PR1 is not adopted)". In the information, information "the maximum number of passengers that can be carried is 15" is reference information, and the other information is a service level that can be agreed on by a traffic provider.

(Third Proposal Information)

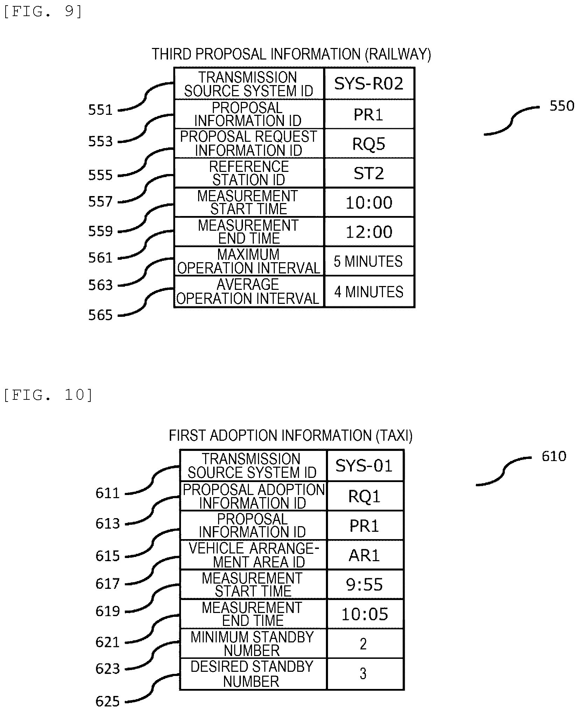

FIG. 9 is a diagram illustrating an example of third proposal information 550. The third proposal information 550 includes various kinds of information of a transmission source system ID 551 for setting identification information of the second traffic management system 30 that is a transmission source of the third proposal request information 450, a proposal information ID 553 for setting identification information of the third proposal information 550, a proposal request information ID 555 for setting identification information of the third proposal request information 450 corresponding to the third proposal information 550, a reference station ID 557 (may be a station different from that in the proposal request information) for setting information of a reference station in response to the reference station ID 457 in the third proposal request information 450, a measurement start time 559 for setting a measurement start time in response to the start time 459 in the third proposal request information 450, a measurement end time 561 for setting a measurement end time in response to the end time 461 in the third proposal request information 450, a maximum operation interval 563 for setting a maximum operation interval of a transportation mode in response to the desired operation interval 463 in the third proposal request information 450, and an average operation interval 565 for setting an average operation interval of a transportation mode in response to the desired operation interval 463 in the third proposal request information 450. In the case of the example illustrated in FIG. 9, the third proposal information 550 indicates to the operation plan creation system 10 that "A train can operate at a maximum operation interval of 5 minutes, and can operate at an average operation interval of 4 minutes at a station of ST2 in a time period from 10:00 to 12:00". In the information, information "a train can operate at a maximum operation interval of 5 minutes at a station of ST2 in a time period from 10:00 to 12:00" is a service level that can be agreed on by a traffic provider, and information "a train can operate at an average operation interval of 4 minutes at a station of ST2 in a time period from 10:00 to 12:00" is reference information.

Next, as illustrated in FIG. 3, the operation plan creation system 10 creates the transportation (service) assignment data 600 (a transportation (service) assignment plan) related to each provider based on the proposal information received from the second traffic management system 30 (s15). When there is proposal information received later than the response deadline indicated by the proposal request information, the operation plan creation system 10 does not use the proposal information.

The operation plan creation system 10 transmits adoption information, which is information including contents of the created transportation (service) assignment data 600 and corresponding to each proposal information, to the second traffic management system 30 related to a provider of a transmission source of the proposal information (s17 and s19). When the operation plan creation system 10 creates the transportation (service) assignment plan including an adjustment margin in s15, the operation plan creation system 10 transmits contents of the adjustment margin to the shuttle bus traffic management system 40. The shuttle bus traffic management system 40 instructs an operation of each transportation mode according to the adjustment margin.

Here, details of the adoption information will be described.

(First Adoption Information)

FIG. 10 is a diagram illustrating an example of first adoption information 610. The first adoption information 610 includes various kinds of information of a transmission source system ID 611 for setting identification information of the operation plan creation system 10 that is a transmission source of the first adoption information 610, a proposal adoption information ID 613 for setting identification information of the first adoption information 610 (may be the same as the proposal request information ID 515 in the first proposal information 510), a proposal information ID 615 for setting information corresponding to the proposal information ID 513 in the first proposal information 510, a vehicle arrangement area ID 617 for setting information adopted based on the vehicle arrangement area ID 517 in the first proposal information 510, a measurement start time 619 for setting a measurement start time adopted based on the measurement start time 519 in the first proposal information 510, a measurement end time 621 for setting a measurement end time adopted based on the measurement end time 521 in the first proposal information 510, a minimum standby number 623 for setting information adopted based on the minimum standby number 523 in the first proposal information 510, and a desired standby number 625 for setting information adopted based on the maximum standby number 525 in the first proposal information 510. When the operation plan creation system 10 creates the first adoption information based on the created transportation (service) assignment plan, the operation plan creation system 10 guarantees that a value to be set in the minimum standby number 623 in the first adoption information 610 is equal to or less than a value set in the minimum standby number 523 in the first proposal information 510, which is a service level that can be agreed on by a traffic provider. That is, when taxis in a number larger than the value set in the minimum standby number 523 in the first proposal information 510 are assigned in the created transportation (service) assignment plan, the operation plan creation system 10 sets the value set in the minimum standby number 623 in the first adoption information 610 to the same value as the value set in the minimum standby number 523 in the first proposal information 510, and sets the number of taxis that are actually assigned in the transportation (service) assignment plan to the desired standby number 625 in the first adoption information 610. Setting a value corresponding to the SLA in the adoption information based on a service level that is provided in the proposal information and that can be agreed on by a traffic provider is similar to second adoption information and third adoption information to be described later.

In the present embodiment, information of the vehicle arrangement area ID 617, the measurement start time 619, the measurement end time 621, and the minimum standby number 623 is the SLA, and information of the desired standby number 625 is reference information. That is, the second traffic management system 30 manages an operation of a travel mode so that a travel mode with at least the number indicated by the standby number 623 is in standby in an area indicated by the vehicle arrangement area ID 617 in a time period from a time indicated by the measurement start time 619 to a time indicated by the measurement end time 621. The second traffic management system 30 may refer to the number of taxis indicated by the desired standby number 625 in order to determine how many travel modes are to be added to standby when there is a surplus travel mode.

(Second Adoption Information)

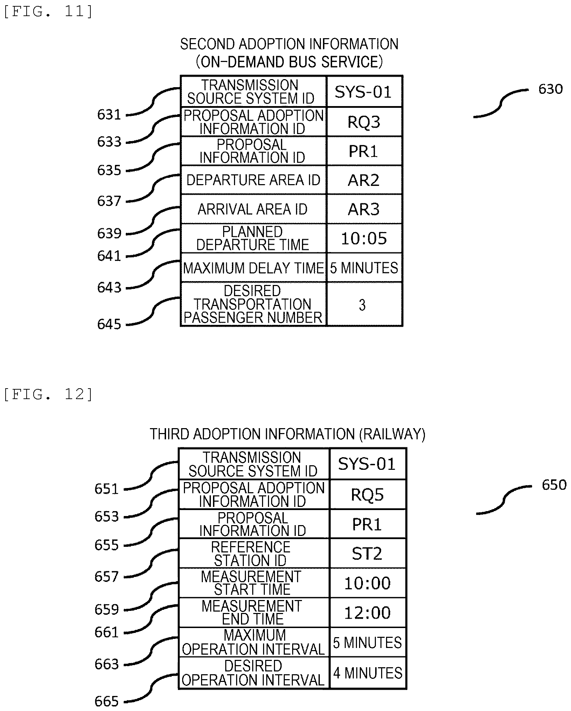

FIG. 11 is a diagram illustrating an example of second adoption information 630. The second adoption information 630 includes various kinds of information of a transmission source system ID 631 for setting identification information of the operation plan creation system 10 that is a transmission source of the second adoption information 630, a proposal adoption information ID 633 for setting identification information of the second adoption information 630 (may be the identification information adopted from the proposal request information ID 537 in the second proposal information 530), a proposal information ID 635 for setting information corresponding to the proposal information ID 533 in the second proposal information 530, a departure area ID 637 for setting information of a departure area adopted based on the travel area ID 539 in the second proposal information 530, an arrival area ID 639 for setting information of an arrival area adopted based on the travel area ID 539 in the second proposal information 530, a planned departure time 641 for setting information of a departure time adopted based on the planned departure time ID 541 in the second proposal information 530, a maximum delay time 643 for setting information of a delay time adopted based on the maximum delay time 543 in the second proposal information 530, and a desired transportation passenger number 645 for setting information of a passenger capacity adopted based on the passenger capacity 545 in the second proposal information 530.

In the present embodiment, information of the maximum delay time 643 is the SLA, and information of the desired transportation passenger number 645 is reference information. That is, the second traffic management system 30 manages an operation of a travel mode so that a travel mode that can depart from an area indicated by the departure area ID 637 at a time indicated by the planned departure time 641 and arrive at an area indicated by the arrival area ID 639 can be provided within a time indicated by the maximum delay time 643 with a maximum delay time from a planned time.

(Third Adoption Information)

FIG. 12 is a diagram illustrating an example of third adoption information 650. The third adoption information 650 includes various kinds of information of a transmission source system ID 651 for setting identification information of the operation plan creation system 10 that is a transmission source of the third adoption information 650, a proposal adoption information ID 653 for setting identification information of the third adoption information 650 (may be the same as the proposal request information ID 555 in the third proposal information 550), a proposal information ID 655 for setting information corresponding to the proposal information ID 553 in the third proposal information 550, a reference station ID 657 for setting information adopted based on the reference station ID 557 in the third proposal information 550, a measurement start time 659 for setting a measurement start time adopted based on the measurement start time 559 in the third proposal information 550, a measurement end time 661 for setting a measurement end time adopted based on the measurement end time 561 in the third proposal information 550, a maximum operation interval 663 for setting information adopted based on the maximum operation interval 563 in the third proposal information 550, and a desired operation interval 665 for setting information adopted based on the average operation interval 565 in the third proposal information 550.

In the present embodiment, information of the reference station ID 657, the measurement start time 659, the measurement end time 661, and the maximum operation interval 663 is the SLA, and information of the desired operation interval 665 is reference information. That is, the second traffic management system 30 manages an operation of a travel mode so that the travel mode can be provided to operate at a maximum operation interval indicated by the maximum operation interval 663 at a station indicated by the reference station ID 657 in a time period from a time indicated by the measurement start time 659 to a time indicated by the measurement end time 661.

Next, as illustrated in FIG. 3, the second traffic management system 30 that received the adoption information from the operation plan creation system 10 operates each transportation mode indicated by the adoption information or executes operation control for each transportation mode based on the received adoption information (transportation (service) assignment plan) (s21 and s23). The second traffic management system 30 transmits an operation result of each transportation mode and service level information of each transportation mode to the operation plan creation system 10. The operation plan creation system 10 stores the received information in the operation record database 700. Then, the traffic service cooperation processing ends.

For example, the second traffic management system 30 arranges a transportation mode in a vehicle arrangement area in a time period indicated by the adoption information, and operates the transportation mode from a departure point to an arrival point in a time period indicated by the adoption information, or operates the transportation mode at a predetermined operation interval. For example, the second traffic management system 30 transmits, as an operation result, information of a transportation result of each transportation mode in a time period from the measurement start time to the measurement end time in the adoption information.

Next, processing executed by the operation plan creation system 10 will be described.

Operation Plan Creation Processing

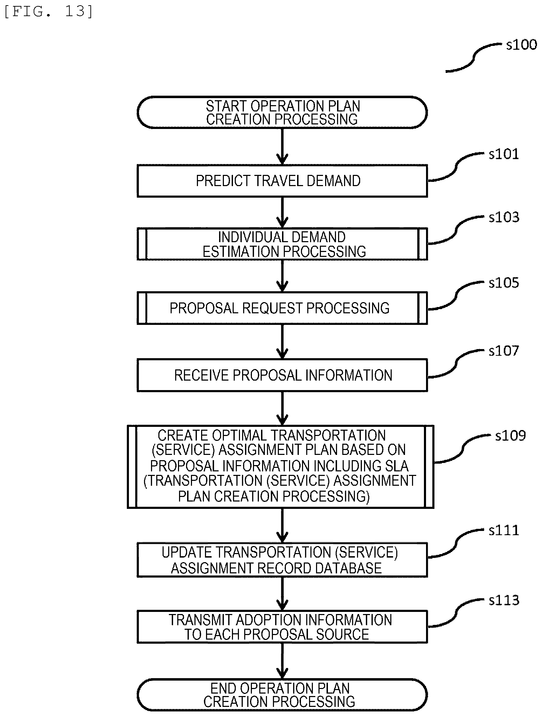

FIG. 13 is a flowchart illustrating details of operation plan creation processing. The operation plan creation processing is executed by the operation plan creation system 10 in the traffic service cooperation processing.

First, the operation plan creation system 10 uses the travel demand prediction program 131 to predict a travel demand of each traveler in all traffic systems (s101). For example, the operation plan creation system 10 acquires travel information of a passenger from the route guidance system 50 or acquires an operation plan from the first traffic management system 20, and predicts a travel demand of each traveler in a predetermined future period (a prediction period) based on the acquired information. A known technique can be used for this prediction, and for example, prediction can be performed by creating a predetermined trained model. The operation plan creation system 10 accumulates the predicted travel demand in the travel demand data 200.

Next, the operation plan creation system 10 uses the individual demand estimation program 133 to execute individual demand estimation processing s103, which is the process of creating the individual travel demand data 300 based on the travel demand predicted in s101. Details of the individual demand estimation processing s103 will be described later.

Subsequently, the operation plan creation system 10 uses the proposal request program 135 to execute proposal request processing s105, which is the process of creating proposal request information for each provider based on information on an individual travel demand (hereinafter, referred to as individual travel demand information) in the individual travel demand data 300 created in the individual demand estimation processing s103, and transmitting the created proposal request information to the corresponding second traffic management system 30. Details of the proposal request processing s105 will be described later.

Subsequently, the operation plan creation system 10 uses the proposal reception program 137 to receive proposal information corresponding to the proposal request information from the second traffic management system 30 (s107). In processing using the proposal reception program 137, when proposal information corresponding to a time later than the response deadline attached in the proposal request information is received, the proposal information is discarded.

Subsequently, the operation plan creation system 10 uses the transportation (service) assignment plan creation program 139 to execute transportation (service) assignment plan creation processing s109, which is the process of creating a transportation (service) assignment plan based on the proposal information received in s107. Details of the transportation (service) assignment plan creation processing s109 will be described later.

After the transportation (service) assignment plan creation processing ends, the operation plan creation system 10 stores information such as the proposal request information, the proposal information, the transportation (service) assignment plan, and a service level obtained in processing in steps s101 to s109 in the transportation (service) assignment record database 800 (s111).

Subsequently, the operation plan creation system 10 uses the assignment result transmission program 141 to create adoption information corresponding to the proposal information by comparing the transportation (service) assignment plan created in s109 with the proposal information received in s107, and to transmit the created adoption information to the second traffic management system 30 (s113). Then, the operation plan creation processing ends.

Next, details of the individual demand estimation processing s103 will be described.

Individual Demand Estimation Processing

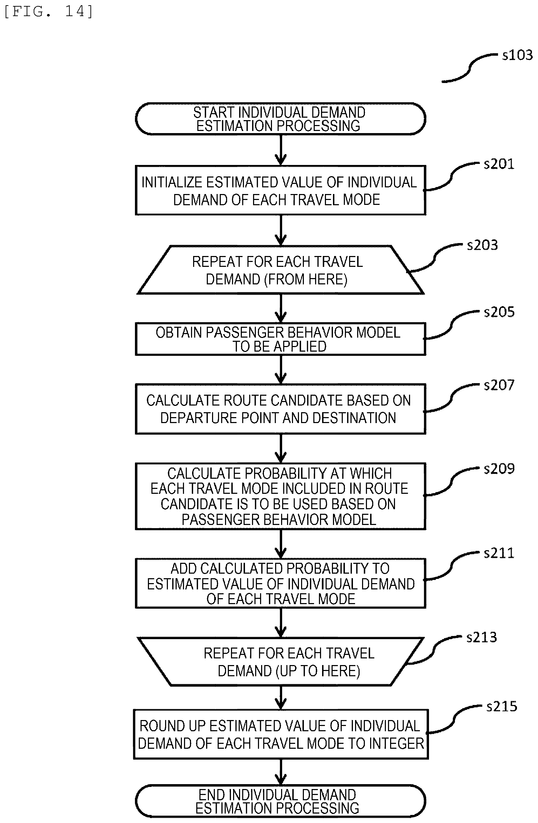

FIG. 14 is a flowchart illustrating details of the individual demand estimation processing s103 executed by the operation plan creation system 10 using the individual demand estimation program 133.

When the individual demand estimation processing is started, the operation plan creation system 10 initializes an estimated value (an expected value) of an individual demand of each travel mode (for example, sets the estimated value to 0) (s201).

Subsequently, the operation plan creation system 10 selects one travel demand (s203).

Subsequently, the operation plan creation system 10 selects a passenger behavior model to be applied to the travel demand selected in s203 (s205).

(Passenger Behavior Model)

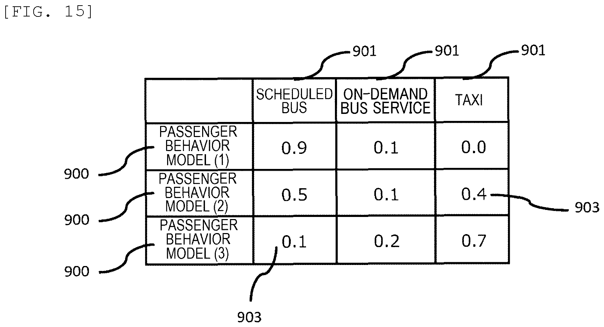

Here, the passenger behavior model according to the present embodiment will be described. FIG. 15 is a diagram illustrating an example of a passenger behavior model 900. The passenger behavior model 900 is a model in which a probability 903 at which a passenger selects a travel mode is set for each type 901 of a travel mode. Accordingly, it is possible to model behavior of selecting a travel mode by a passenger at the time of travel, such as prioritizing a travel route that reduces cost, prioritizing a travel route that shortens a required time, and prioritizing a travel route that reduces a walking distance. For example, in FIG. 15, a passenger behavior model (1) is a model assuming that a passenger wants to travel at low cost, a passenger behavior model (2) is a model assuming that a passenger places importance on an arrival time, and a passenger behavior model (3) is a model assuming that a passenger places importance on a walking distance. An external factor such as rainfall may be set in the passenger behavior model 900 and reflected in the probability 903. In addition, the passenger behavior model 900 may be set to a different model for each boarding and alighting point.

Returning to the description of FIG. 14. After the processing in step s203 ends, the operation plan creation system 10 lists a predetermined number of travel routes using any of the transportation modes, from a departure point to a destination in the travel demand selected in s203 (s207). A known technique such as a technique used for route guidance can be used to list the predetermined number of travel routes. In the processing using the individual demand estimation program 133, a time and a point may be discretized with a predetermined resolution. For example, departure times that are close to each other, departure points that are close to each other, or destinations that are close to each other may be treated as a single departure time, a single departure point, or a single destination that respectively represents the departure times, the departure points, or the destinations.

When a timetable of a transportation mode is known, such as a scheduled bus, each bus is treated as one transportation mode. As described above, a predetermined area may be represented by one point among points of a departure point, a destination, and a stopover point in a travel route, and when it is a special point such as a taxi boarding and alighting point of a station, a hospital, or the like, the point may be treated as one point separate from an area close to the point. When there is no fixed travel route such as an on-demand bus service, patterns of a plurality of travel routes may be provided in advance, and any of the patterns may be selected.

Subsequently, the operation plan creation system 10 calculates a probability of selecting each travel route specified in s207 based on the passenger behavior model selected in s205 (s209).

After the processing in s209 ends, the operation plan creation system 10 adds the probability calculated in s209 to the estimated value associated with each individual demand for each travel route (s211).

The operation plan creation system 10 checks whether there is a travel demand that is not selected so far (s213). When there is a travel demand that is not selected so far, the operation plan creation system 10 executes the processing in s203 to select one travel demand. When all travel demands are selected, the operation plan creation system 10 executes processing in s215.

In s215, the operation plan creation system 10 executes rounding processing on the estimated value of an individual demand of each travel mode calculated so far (for example, a decimal point or less is rounded up to an integer). At this time, the individual demand estimation program 133 may multiply the estimated value of the individual demand of each travel mode by a correction coefficient (for example, a value indicating an in-area share related to the same type of travel modes) for reflecting an influence of another transportation capacity that is not included in the traffic service cooperation system 1. Then, the individual demand estimation processing s103 ends.

Next, details of the proposal request processing s105 will be described.

Proposal Request Processing

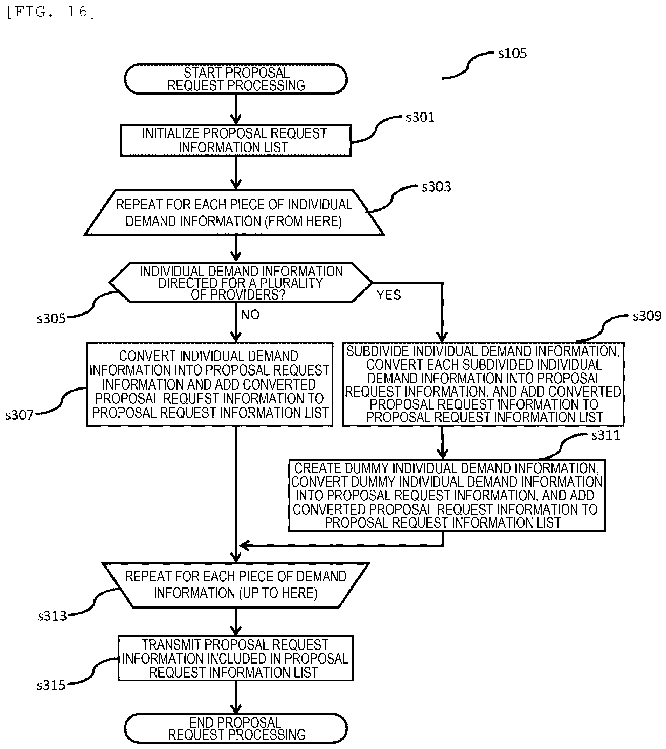

FIG. 16 is a flowchart illustrating details of the proposal request processing s105 executed by the operation plan creation system 10 using the proposal request program 135.

When the proposal request processing s105 is started, the operation plan creation system 10 initializes proposal request information (s301).

Next, the operation plan creation system 10 selects one individual demand (s303). Then, the operation plan creation system 10 determines whether the selected individual demand can be handled in common by any of the transportation modes provided by a plurality of providers (s305). For example, when a travel mode corresponding to the individual demand is a taxi, generally, a taxi provided by any one provider among a plurality of providers can handle the individual demand. In such a case, proposal request information having the same contents is transmitted to each of the plurality of providers in the present embodiment, and which one of the providers is to be selected is determined according to contents of proposal information corresponding to the proposal request information. In preparation for this, in order to prevent an unauthorized behavior of each provider, "YES" is made in the determination in s305, and the proposal request processing s105 proceeds to the processing in and s311 to improve contents of the proposal request information (details of the processing in s309 and s311 will be described later). On the other hand, when there is only one provider that can handle the individual demand, since it is not necessary to improve the contents of the proposal request information as in the processing in s309 and s311, "NO" is made in the determination in s305, the proposal request processing s105 proceeds to processing in s307, and the proposal request information is created by simple processing.

As described above, when the individual demand is directed for a plurality of providers (s305: YES), the operation plan creation system 10 executes the processing in s309. On the other hand, when the individual demand is not directed for a plurality of providers (s305: NO), the operation plan creation system 10 executes the processing in s307.

In s307, the operation plan creation system 10 executes data conversion on the individual demand selected in s303 to create proposal request information.

For example, depending on the type of transportation mode, the operation plan creation system 10 sets an ID of the operation plan creation system 10 in the transmission source system ID 411 of the first proposal request information 410, the transmission source system ID 431 of the second proposal request information 430, or the transmission source system ID 451 of the third proposal request information 450, sets a new ID in the proposal request information ID 413 of the first proposal request information 410, the proposal request information ID 433 of the second proposal request information 430, or the proposal request information ID 453 of the third proposal request information 450, and sets a time after a predetermined time from current processing in the proposal deadline 415 of the first proposal request information 410, the proposal deadline 435 of the second proposal request information 430, or the proposal deadline 455 of the third proposal request information 450. In addition, the operation plan creation system 10 sets information on each departure point in the individual demand to the vehicle arrangement area ID 417 of the first proposal request information 410 or the departure area ID 437 of the second proposal request information 430, sets information on each arrival point in the individual demand to the arrival area ID 439 of the second proposal request information 430, sets information on each time period in the individual demand to the reference time 419 of the first proposal request information 410 or the departure time 441 of the second proposal request information 430, and sets the number of travelers in the individual demand or information (the number of vehicles, an operation interval, or the like) calculated from the number of travelers to the desired standby number 421 of the first proposal request information 410 or the desired transportation passenger number 443 of the second proposal request information 430. Further, the operation plan creation system 10 sets, in the reference station ID 457 of the third proposal request information 450, an ID of a predetermined station such as a station where a train is expected to be most crowded at the time of departure in a time period in which an operation interval is adjusted, sets, in the start time 459 and the end time 461 of the third proposal request information 450, a start time and an end time of a time period in which a train is expected to have a crowded rate equal to or larger than a predetermined threshold in the individual demand (that is, a time period in which an operation interval is adjusted), and sets, in the desired operation interval 463 of the third proposal request information 450, an operation interval obtained from the number of trains expected to be required to make the crowded rate less than the predetermined threshold. After the processing in s307 ends, the operation plan creation system 10 executes processing in s313.

On the other hand, when the individual demand selected in s303 is directed for a plurality of providers, in s309, the operation plan creation system 10 creates proposal request information by subdividing the individual demand selected in s303 and then executing data conversion.

For example, the operation plan creation system 10 divides the individual demand into information obtained by dividing information that can be used to estimate the number of travelers by a predetermined reference value (creates a plurality of pieces of information of the individual demand such as "five vehicles" or "three persons"). Then, the proposal request program 135 sets each of the individual demands obtained by dividing in the proposal request information as described in s307. For example, when the number of travel modes that are desired to be arranged is 14, instead of creating one piece of proposal request information indicating that the number of travel modes that are desired to be arranged is 14, two pieces of proposal request information indicating that the number of travel modes that are desired to be arranged is five and one piece of proposal request information indicating that the number of travel modes that are desired to be arranged is four are created. As described above, the number of travel modes desired as all of a plurality of pieces of divided proposal request information is equal to the number of travel modes desired in proposal request information corresponding to the individual demand before division, and is created by being divided into a plurality of pieces of proposal request information, so that it is difficult for each provider that receives only a part of the proposal request information to correctly estimate the number of travel modes desired as a whole by the operation plan creation system 10, that is, an amount of a travel demand estimated by the operation plan creation system 10, and it is difficult to conveniently use information related to a travel demand obtained from the operation plan creation system 10 outside a framework of supply and demand adjustment in the traffic service cooperation system 1.

The operation plan creation system 10 further creates proposal request information by creating an imaginary (dummy) individual demand and executing data conversion (s311).

For example, the operation plan creation system 10 creates dummy individual demands with the number obtained by multiplying the number of individual demands created in s309 by a predetermined coefficient, and converts the dummy individual demands into proposal request information. Specifically, for example, the operation plan creation system 10 refers to the transportation (service) assignment record database 800, and randomly acquires, by the number of necessary dummy proposal request information, proposal request information having an expiration date close to an expiration date of the proposal request information created in the processing in s309 from past proposal request information of a corresponding travel mode. The operation plan creation system 10 further sets information such as a departure point, an arrival point, a time, and the number of persons in the acquired past proposal request information as the dummy individual demands, and sets a dummy individual demand that is set with necessary information as corresponding proposal request information. After the processing in s311 ends, the operation plan creation system 10 executes processing in s313.

A method of creating the dummy individual demand is not limited to the method described here as long as the information makes it difficult for each provider to determine that the created individual demand is a dummy. For example, the proposal request program 135 may create proposal request information by creating a dummy individual demand similar to the individual demand corresponding to the proposal request information created in s309 without referring to the transportation (service) assignment record database 800.

As described above, contents of a true proposal request, that is, an amount of travel demands are made appropriately unclear by subdividing the proposal request information and interweaving imaginary proposal request information.

After the processing in s307 or s311 ends, the operation plan creation system 10 checks in s313 whether there is an individual demand for which the proposal request information is not created. When there is an individual demand for which the proposal request information is not created, the operation plan creation system 10 returns the proposal request processing s105 to the processing in s303 to select the individual demand, and when there is no individual demand for which the proposal request information is not created, the operation plan creation system 10 executes processing in s315.

In s315, the operation plan creation system 10 transmits the proposal request information created so far to the second traffic management system 30 of a corresponding provider (s315). For example, the operation plan creation system 10 may transmit all of the created one or more pieces of the first proposal request information (proposal request information for a taxi) to the taxi traffic management systems 30c of all taxi providers connected via the network 5 in a broadcast manner, or may send only a part of the created one or more pieces of the first proposal request information (the proposal request information for a taxi) to only some of the taxi traffic management systems 30c selected based on past operation records or the like from the taxi traffic management systems 30c of taxi providers connected via the network 5. At this time, the operation plan creation system 10 may adjust a transmission order of proposal request information such that the subdivided true proposal request information created in s309 and the dummy proposal request information created in s311 cannot be distinguished from each other (for example, the proposal request information is transmitted in order of a proposal request information ID, or in random order). After the processing in s315 ends, the operation plan creation system 10 ends the proposal request processing s105.

Transportation (Service) Assignment Plan Creation Processing

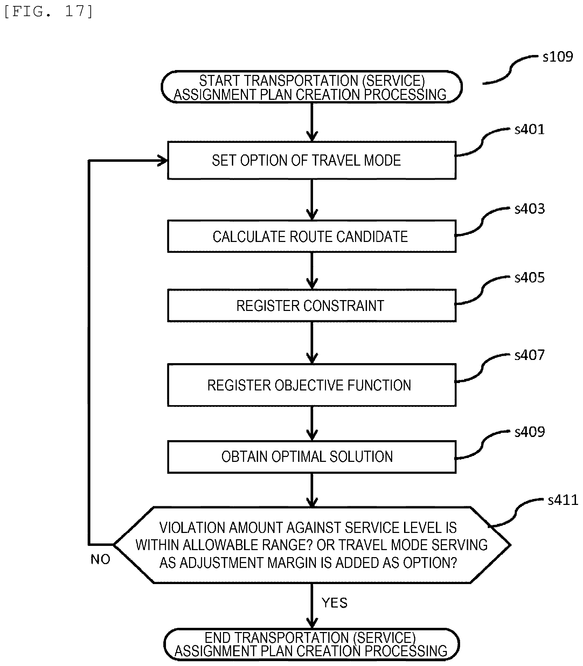

FIG. 17 is a flowchart illustrating details of the transportation (service) assignment plan creation processing s109 executed by the operation plan creation system 10 using the transportation (service) assignment plan creation program 139.

The operation plan creation system 10 sets, for the proposal information received in s107, whether to create an operation plan using a transportation mode corresponding to one of a plurality of service levels indicated by the proposal information (s401).

In the present embodiment, the operation plan creation system 10 creates an operation plan while expanding, in a stepwise manner, a set of transportation modes used for creating the operation plan according to quality of the created operation plan. For example, when processing in s403 to be described later is executed for the first time, an operation plan is created using only a travel mode that is indicated by the proposal information and can be reliably provided, in addition to a travel mode serving as a base, such as a scheduled bus (creation of an operation plan using a first travel mode set). When the created operation plan does not satisfy a predetermined condition and the processing in s403 is executed for a second time, an operation plan is created using a travel mode that is indicated by the proposal information and may be provided, in addition to a travel mode serving as a base, such as a scheduled bus (creation of an operation plan using a second travel mode set). When the created operation plan does not satisfy the predetermined condition and the processing in s403 is executed for a third time, an operation plan is created using a travel mode that is indicated by the proposal information and may be provided and a travel mode that is managed by an adjustment margin management system and serves as an adjustment margin, in addition to a travel mode serving as a base, such as a scheduled bus (creation of an operation plan using a third travel mode set). As described above, an operation plan is created in order of the first travel mode set, the second travel mode set, and the third travel mode set so that a possibility of satisfying a service level indicated by a proposal request increases in a stepwise manner.

For example, when a travel mode is a taxi, the operation plan creation system 10 includes, in the first travel mode set, taxis in a number corresponding to the minimum standby number 523 of the first proposal information 510. The operation plan creation system 10 includes, in the second travel mode set, taxis in a number corresponding to the maximum standby number 525 of the first proposal information 510. The operation plan creation system 10 includes, in the third travel mode set, the number of travel modes related to the shuttle bus traffic management system 40 (including information such as an arrangement and the number of each transportation mode).

The method of selecting a travel mode included in each travel mode set is not limited to the one described here. For example, a travel mode set may be defined and adopted such that an average value of the number represented by the minimum standby number 523 and the number represented by the maximum standby number 525 of the first proposal information 510 is included between processing using the first travel mode set and processing using the second travel mode set. Further, not only number but also time may be taken into consideration (for example, a time indicated by the measurement end time 521 of the first proposal information 510 is used for a travel mode included in the first travel mode set, and a time indicated by the measurement start time 519 of the first proposal information 510 is used for a travel mode included in the second travel mode set).

As described above, it is possible to preferentially create an operation plan that is highly likely to be executed by each provider by expanding, in a stepwise manner, a transportation mode set used for creating an operation plan.

The operation plan creation system 10 creates a pattern (a route candidate) of a combination of transportation modes that can be taken along a travel route from a departure point to a destination for each traveler (agent) based on the passenger behavior model selected in s205 (s403). Similar to s207, a known technique may be used.

Subsequently, the operation plan creation system 10 sets a constraint (s405) and sets an objective function (s407) in order to solve a creation problem of a transportation (service) assignment plan as a set dividing problem in which whether to adopt each route candidate created in s403 is set as a determination variable.

Specifically, the operation plan creation system 10 sets, as the determination variable, a variable indicating whether each route candidate $j_i$ (i = 1, 2 **...** n) is 1 (adopted) or 0 (not adopted).

The operation plan creation system 10 creates constraints on each route candidate created in s403.

For example, the operation plan creation system 10 creates, for each traveler (agent), the constraint of selecting just one route (a set of travel modes) (hereinafter, referred to as a first constraint) from a plurality of route candidates related to the traveler.

For example, when the route candidates include a plurality of transportation modes that are not compatible with each other at the same time (when values are set to both the proposal information ID 533 and the exclusive proposal information ID 535 of the second proposal information 530), the operation plan creation system 10 creates a constraint for selecting at most one transportation mode (hereinafter, referred to as a second constraint) from transportation modes serving as all route selection results related to all travelers.

The constraint described here is an example, and for example, the constraint may be a constraint indicating that the number of passengers transported by a transportation mode does not exceed the capacity of the transportation mode.

Subsequently, the operation plan creation system 10 creates an objective function (s407).

In the present embodiment, the objective function is represented by a linear combination of evaluation values related to a plurality of evaluation items. A coefficient of each item used in the linear combination is given, and a solution that minimizes the objective function is obtained by optimization processing.

Here, in one of the evaluation items, for an evaluation index for which the operation plan creation system 10 is required to guarantee a service level, such as **"a** transfer time related to travel of each passenger", a sum (or an average value or the like) of violation amounts against the service level to be guaranteed is set as an evaluation value (a first evaluation index). Here, it should be noted that the service level used in the calculation of the violation amount is, for example, a service level to be "satisfied by the traffic service cooperation system 1" based on a contract with a local government, and the service level is different from a service level in the proposal request information. When evaluating the transfer time, calculation may be executed by sequentially referring to a travel mode to be used by a traveler for each route candidate.

Another one of the evaluation items is an evaluation item related to executability of an operation plan, and a difference between a required transportation capacity of each travel mode based on route selection results of all travelers and an adopted transportation capacity of each travel mode (a value corresponding to a deliverable service level) is used as an evaluation value (a second evaluation index). Here, the "value corresponding to a deliverable service level" may be, for example, the number indicated by the minimum standby number 523 of the first proposal information 510, a transportation capacity indicated by passenger capacity 545 of the second proposal information 530, and an operation interval indicated by the maximum operation interval 563 of the third proposal information 550.

Another one of the evaluation items is a past SLA compliance record. For example, an operation of assigning less transportation capacity to a provider who often did not conform to the SLA in the past is assumed. Specifically, a violation rate (an SLA violation rate) against adoption information is calculated for each provider with reference to the operation record database 700 and the transportation (service) assignment record database 800 (treated as a constant in the objective function). Then, the calculated SLA violation rate is used to set, for example, [SLA violation rate of provider A] $\times$ [number of adopted proposal information of provider A] as an evaluation value (a third evaluation index).

The evaluation items described here are examples, and other evaluation items may be adopted or some evaluation items may be excluded.

Subsequently, the operation plan creation system 10 specifies a combination of values of the determination variable that optimizes (for example, minimizes) a value of the objective function created in s407 under the constraint created in s405 (s409). For this optimization, for example, a known technique such as a mixed integer programming (MIP) problem solver can be used.

Subsequently, the operation plan creation system 10 determines whether an optimal solution obtained in s409 may be determined as a transportation (service) assignment plan (s411).

For example, the operation plan creation system 10 determines whether a violation amount (corresponding to the first evaluation index) of all service levels in the optimal solution obtained in s409 is below a predetermined threshold, and when the violation amount is below the threshold, the operation plan creation system 10 determines that the optimal solution obtained in s409 may be determined as a transportation (service) assignment plan (s411: YES). Alternatively, when a transportation mode serving as an adjustment margin is included in a travel mode set in s401, the operation plan creation system 10 determines that the optimal solution obtained in s409 may be determined as the transportation (service) assignment plan (s411: YES). Otherwise, the operation plan creation system 10 determines that the optimal solution obtained in s409 cannot be determined as the transportation (service) assignment plan (s411: NO).

When the optimal solution obtained in s409 may be determined as the transportation (service) assignment plan (s411: YES), the operation plan creation system 10 accumulates information of the transportation (service) assignment plan corresponding to the optimal solution obtained in s409 together with other accompanying information in the transportation (service) assignment record database 800 and ends the transportation (service) assignment plan creation processing s109, and when the optimal solution of the objective function obtained in s409 cannot be determined as the transportation (service) assignment plan (s411: NO), the operation plan creation system 10 returns the transportation (service) assignment plan creation processing s109 to s401 and repeats the processing in s401 and subsequent steps.

(Example of Constraint Creation Method)

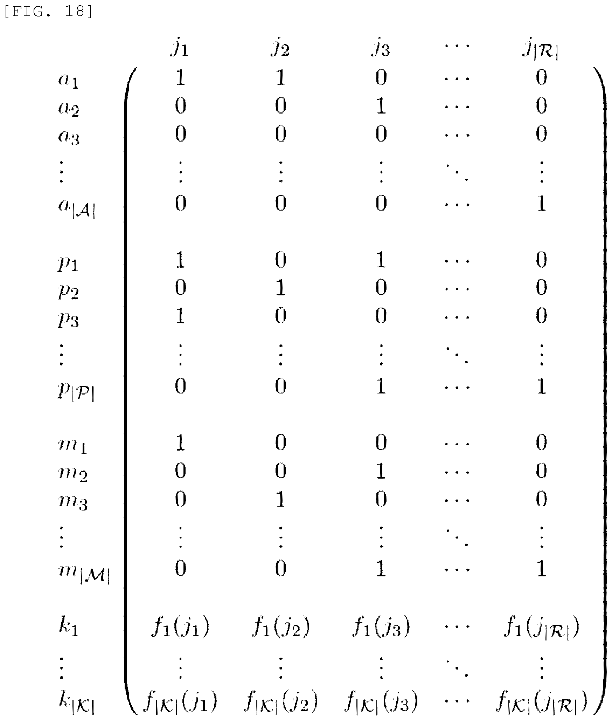

FIG. 18 is a diagram illustrating an example of a matrix used to create an objective function and a constraint of a mixed integer programming problem. The matrix includes columns corresponding to respective routes $j_i$ (i = 1, 2, 3 ... R), travelers $a_i$ (agent) (i = 1, 2, 3 ... A), proposal information $p_i$ (i = 1, 2, 3 ... P), transportation modes $m_i$ (i = 1, 2, 3 ... M), and evaluation items $k_i$ (i = 1, 2, 3 ... K).

A plurality of transportation modes m may correspond to each route $j_i$ (for example, a case where traveling by transferring between a plurality of transportation modes). A plurality of transportation modes m may correspond to each piece of proposal information $p_i$ (for example, a case where there are a plurality of taxis available). In such a case, even when the same $p_i$ column is "1", such as a $j_1$ column and a $j_3$ column, different $m_i$ columns may be "1".

A value $v(a_i,j)$ of an element $(a_i,j)$ is set to "1" when the route j is a route for the agent $a_i$, and is set to "0" when the route j is a route for another agent.

A value $v(p_i,j)$ of an element $(p_i,j)$ is set to "1" when a transportation mode (except for a transportation mode related to an adjustment margin) included in the proposal information $p_i$ is included in the route j, and is set to "0" when the transportation mode is not included in the route j.

A value $v(m_i,j)$ of an element $(m_i,j)$ is set to "1" when the transportation mode $m_i$ is included in the route j, and is set to "0" when the transportation mode $m_i$ is not included in the route j (when the number of travelers can be estimated at the same time, such as family travel, $v(m_i,j)$ may be associated with corresponding number of transported persons).

For an evaluation index that is uniquely determined when the route j is determined, such as "a transfer time related to travel of each passenger", a calculation result $f_i(j)$ for an evaluation index $k_i$ is stored as a value $v(k_i,j)$ of an element $(k_i,j)$.

Under the above definition, the first constraint is expressed by the following formula. Here, $x_j$ is the above-described determination variable, and has a value of 1 when the route j is adopted, and has a value of 0 when the route j is not adopted.

$$\sum_{j \in R} \left( v(a_i, j) \cdot x_j \right) = 1 \ (\forall i \in A)$$

The second constraint is expressed as, for example, a set of the following two types of formulas (B is a constant having a sufficiently large positive value, and is generally referred to as "big-M").

$$\sum_{j \in R} \left( v(p_i, j) \cdot x_j \right) \le B(1 - y_i) \ (i = 1,2,3,\ldots,P)$$

$$\sum_{i=1}^{n} y_i = P - 1 \quad (y_i = 0 \ or \ 1, \quad i = 1,2,3,\ldots,P)$$

Further, for each transportation mode $m_i$, a required transportation capacity of the transportation mode $m_i$ based on adoption $x_j$ of the route j is expressed by the following formula.

$$\sum_{j \in R} \left( v(m_i, j) \cdot x_j \right)$$

As described above, the operation plan creation system 10 according to the present embodiment creates, based on a travel demand, an individual demand that is information related to a travel demand amount by a transportation mode in each section constituting a travel route from a departure point to a destination of a traveler, calculates a service level of each section for each transportation mode based on the created individual demand, creates proposal request information including the calculated service level for each transportation mode, and transmits the created proposal request information to the second traffic management system 30. Then, the operation plan creation system 10 receives proposal information from the second traffic management system 30, creates a transportation (service) assignment plan satisfying the service level indicated by the received proposal information for each transportation mode, and transmits the created transportation (service) assignment plan to the second traffic management system 30.

That is, the operation plan creation system 10 according to the present embodiment receives, from the second traffic management system 30, proposal information including a service level corresponding to the proposal request information previously transmitted by the operation plan creation system 10, and transmits the transportation (service) assignment plan satisfying the service level of the proposal information to the second traffic management system 30.

As described above, the operation plan creation system 10 according to the present embodiment can create an operation plan (a transportation (service) assignment plan) for enabling appropriate cooperation among traffic services while considering circumstances of each of a plurality of traffic service providers.

Further, the operation plan creation system 10 according to the present embodiment creates an individual demand related to a travel mode based on the travel demand and the passenger behavior model.

Accordingly, it is possible to create an appropriate individual demand suitable for reality based on a travel tendency of a traveler.

Further, the operation plan creation system 10 according to the present embodiment creates a transportation plan by specifying a service level of a transportation service in each section by each transportation mode that satisfies a constraint related to a service level of the proposal information and optimizes a service level of all traffic services.

Accordingly, it is possible to provide a passenger with an optimum traffic service of all transportation services while maintaining lowest service quality.

The operation plan creation system 10 according to the present embodiment divides the proposal request information into a plurality of pieces of proposal request information according to the service level indicated by the proposal request information, and transmits the divided proposal request information to the second traffic management system 30.

Further, the operation plan creation system 10 according to the present embodiment transmits proposal request information having imaginary contents for a transportation mode to the second traffic management system 30.

As described above, a true proposal request for a travel demand of a passenger is appropriately divided and made unclear to be treated as the proposal request information, so that it is possible to prevent a specific traffic service provider from taking over the travel demand of the passenger, and it is possible to provide a transportation service of stable quality of all traffic providers to the passenger.

When the operation plan creation system 10 according to the present embodiment receives proposal information including information of a service level in a second section different from a first section from the second traffic management system 30 after proposal request information of a service level in the first section provided by a transportation mode is transmitted to the second traffic management system 30, the operation plan creation system 10 creates a transportation (service) assignment plan based on the second section indicated by the received proposal information.

Accordingly, a traffic service provider can propose to the operation plan creation system 10 to provide a transportation service in a section different from a section indicated by the proposal request information. Therefore, the traffic service provider can provide an appropriate transportation service while maintaining autonomy.

When the service level of all traffic services provided by the transportation mode indicated by the received proposal information does not reach a predetermined level, the operation plan creation system 10 according to the present embodiment creates a new transportation (service) assignment plan in a service level range indicated by the proposal information (an operation plan using the first travel mode set, the second travel mode set, and the third travel mode set).

Accordingly, it is possible to provide a transportation service that is highly likely to be executed by each traffic provider.

The operation plan creation system 10 according to the present embodiment determines a service level to be set in the transportation (service) assignment plan based on a past compliance history of a service level designated by adoption information for each traffic provider.

As described above, it is possible to provide a high service level transportation service to a passenger in a more reliable manner, and it is possible to indirectly prompt a traffic service provider to conform more closely to the service level thereafter by creating a transportation (service) assignment plan according to a compliance status of a service level of each traffic service provider in the past.

For a plurality of pieces of proposal information that are received from the second traffic management system 30 and cannot be selected at the same time, the operation plan creation system 10 according to the present embodiment creates a transportation (service) assignment plan based on at most one piece of the proposal information corresponding to a plurality of pieces of proposal request information.

As described above, it is possible to improve efficiency of processing a proposal of a transportation service and it is also possible to effectively use a transportation mode by adopting at most one piece of the proposal information from a plurality of pieces of proposal information that cannot be selected at the same time.

The traffic service cooperation system 1 according to the present embodiment includes traffic management systems of a plurality of traffic services for the operation plan creation system 10. Accordingly, it is possible to achieve appropriate cooperation among traffic service providers.

When the second traffic management system 30 according to the present embodiment receives a plurality of pieces of proposal request information from the operation plan creation system 10, the second traffic management system 30 transmits one corresponding piece of proposal information to the operation plan creation system 50.

Accordingly, it is possible to increase selection options of traffic service providers and achieve more appropriate cooperation between a traffic service with the operation plan creation system 10.

The second traffic management system 30 according to the present embodiment controls a transportation mode based on the transportation (service) assignment plan received from the operation plan creation system 10. Accordingly, it is possible to achieve appropriate cooperation and operation by each traffic service provider.

The invention is not limited to the embodiment described above and can be implemented using any component without departing from the gist of the invention. The embodiment and modifications described above are merely examples, and the invention is not limited to the contents thereof as long as features of the invention are not impaired. Although various embodiments and modifications have been described above, the invention is not limited to the contents thereof. Other aspects conceivable within the scope of a technical idea of the invention are also included within the scope of the invention.

For example, some functions of each device in the present embodiment may be provided in another device, or functions of another device may be provided in the same device.

In addition, the configuration of the program described in the embodiment is an example, and for example, a part of the program may be incorporated into another program, or a plurality of programs may be implemented as a single program.

Reference Signs List

1: traffic service cooperation system
10: operation plan creation system
30: second traffic management system
131: travel demand prediction program
133: individual demand estimation program
135: proposal request program
137: proposal reception program
139: transportation (service) assignment plan creation program
141: assignment result transmission program

**Claims**

1. An operation plan creation system that transmits information to and receives information from a plurality of traffic management systems, the operation plan creation system comprising:

a storage unit configured to store a travel demand including information on a departure point and a destination of a traveler; and
an arithmetic processing unit configured to execute

individual demand estimation processing of creating, based on the travel demand, an individual demand of the traveler who travels using at least one transportation mode of transportation modes of a plurality of traffic services, the individual demand being information on travel of the traveler to be transported by the transportation mode in each section of one or a plurality of sections constituting a travel route from the departure point to the destination,

proposal request processing of calculating, based on the created individual demand, a service level for each of the transportation modes, the service level being an evaluation value of a transportation service in each of the sections provided by the transportation mode, creating proposal request information that is information including the calculated service level for each of the transportation modes, and transmitting the created proposal request information to an information processing device associated with the transportation mode,

proposal reception processing of receiving, from the information processing device, proposal information that is service level response information to the proposal request information,

transportation (service) assignment plan creation processing of creating, for each of the transportation modes, a transportation (service) assignment plan that is information on a service level in each of the sections provided by the transportation mode and that satisfies a service level indicated by the received proposal information, and

assignment result transmission processing of transmitting the created transportation (service) assignment plan to an information processing device associated with the transportation mode related to the transportation (service) assignment plan.

2. The operation plan creation system according to claim 1, wherein
in the individual demand estimation processing, the arithmetic processing unit creates the individual demand of the traveler based on the travel demand and a passenger behavior model that defines a use tendency of the traveler for a transportation mode of the traffic service, the travel demand and the passenger behavior model being stored in the storage unit.

3. The operation plan creation system according to claim 1, wherein
in the transportation (service) assignment plan creation processing, the arithmetic processing unit specifies a service level for a transportation service in each of the sections provided by each of the transportation modes that satisfies a condition related to the service level indicated by the received proposal information and optimizes service levels of all traffic services provided by the transportation modes, and creates the transportation (service) assignment plan based on the specified service level.

4. The operation plan creation system according to claim 1, wherein
in the proposal request processing, the arithmetic processing unit divides the created individual demand into a plurality of individual demands, creates proposal request information based on the individual demands obtained by dividing, and transmits the created proposal request information to an information processing device associated with the transportation mode.

5. The operation plan creation system according to claim 1, wherein
in the proposal request processing, the arithmetic processing unit creates second proposal request information based on a fictitious individual demand in addition to first proposal request information that is the created proposal request information, and transmits the created first proposal request information and second proposal request information to information processing devices associated with the transportation mode, respectively.

6. The operation plan creation system according to claim 1, wherein

in the proposal request processing, the arithmetic processing unit transmits proposal request information including information on a service level of a first section provided by the transportation mode to the information processing device, and
when the proposal information including information on a service level in a second section different from the first section is received from the information processing device in the proposal reception processing, the arithmetic processing unit creates the transportation (service) assignment plan based on the service level indicated by the received proposal information in the transportation (service) assignment plan creation processing.

7. The operation plan creation system according to claim 1, wherein
in the transportation (service) assignment plan creation processing, when a service level of all traffic services provided by the transportation modes based on the created transportation (service) assignment plan does not satisfy a predetermined level, the arithmetic processing unit creates a new transportation (service) assignment plan using more transportation modes within a range of service levels indicated by the proposal information.

8. The operation plan creation system according to claim 1, wherein
in the transportation (service) assignment plan creation processing, the arithmetic processing unit obtains a compliance status of a service level of the transportation mode in the past based on an operation record and a transportation (service) assignment record which are related to a transportation mode corresponding to the information processing device, and determines a service level to be set to the transportation (service) assignment plan among the service levels indicated by the received proposal information based on the compliance status of the service level.

9. The operation plan creation system according to claim 1, wherein
when a plurality of pieces of the proposal information designated to be not selectable at the same time are received from the traffic management system in the proposal reception processing, the arithmetic processing unit creates a transportation (service) assignment plan based on at most one piece of the proposal information selected from the received plurality of pieces of proposal information in the transportation (service) assignment plan creation processing.

10. A traffic service cooperation system comprising:

an operation plan creation system configured to transmit information to and receive information from a traffic management system of a plurality of traffic services, wherein
the operation plan creation system includes

a storage unit configured to store a travel demand including information on a departure point and a destination of a traveler, and
an arithmetic processing unit configured to execute

individual demand estimation processing of creating, based on the travel demand, an individual demand of the traveler who travels using at least one transportation mode of transportation modes of the plurality of traffic services, the individual demand being information on travel of the traveler to be transported by the transportation mode in each section of one or a plurality of sections constituting a travel route from the departure point to the destination,
proposal request processing of calculating, based on the created individual demand, a service level for each of the transportation modes, the service level being an evaluation value of a transportation service in each of the sections provided by the transportation mode, creating proposal request information that is information including the calculated service level for each of the transportation modes, and transmitting the created proposal request information to the traffic management system associated with the transportation mode,
proposal reception processing of receiving, from the traffic management system, proposal information that is service level response information to the proposal request information,
transportation (service) assignment plan creation processing of creating, for each of the transportation modes, a transportation (service) assignment plan that is information on a service level in each of the sections provided by the transportation mode and that satisfies a service level indicated by the received proposal information, and
assignment result transmission processing of transmitting the created transportation (service) assignment plan to the traffic management system associated with the transportation mode related to the transportation (service) assignment plan.

11. The traffic service cooperation system according to claim 10, wherein
the traffic management system includes at least an arithmetic processing unit, and the arithmetic processing unit executes processing of receiving a plurality of pieces of proposal request information from the operation plan creation system and transmitting one piece of proposal information corresponding to the received plurality of pieces of proposal request information to the operation plan creation system.

12. The traffic service cooperation system according to claim 10, wherein
the traffic management system includes a control device, and the control device controls the transportation mode based on the transportation (service) assignment plan received from the operation plan creation system.

13. An operation plan creation method for an operation plan creation system that includes an arithmetic processing unit and a storage unit and which transmits information to and receives information from a plurality of traffic management systems, the operation plan creation method comprising:

storing a travel demand including information on a departure point and a destination of a traveler in the storage unit;

individual demand estimation processing of creating, based on the travel demand, an individual demand of the traveler who travels using at least one transportation mode of transportation modes of a plurality of traffic services, the individual demand being information on travel using any of the transportation modes in each section of one or a plurality of sections constituting a travel route from the departure point to the destination;

proposal request processing of calculating, based on the created individual demand, a service level for each of the transportation modes, the service level being an evaluation value of a transportation service in each of the sections for the traveler to be transported by the transportation mode, creating proposal request information that is information including the calculated service level for each of the transportation modes, and transmitting the created proposal request information to an information processing device associated with the transportation mode;

proposal reception processing of receiving, from the information processing device, proposal information that is service level response information to the proposal request information;

transportation (service) assignment plan creation processing of creating, for each of the transportation modes, a transportation (service) assignment plan that is information on a service level in each of the sections provided by the transportation mode and that satisfies a service level indicated by the received proposal information; and

assignment result transmission processing of transmitting the created transportation (service) assignment plan to an information processing device associated with the transportation mode related to the transportation (service) assignment plan.

14. An operation plan creation program for causing an arithmetic processing unit of an information processing device including the arithmetic processing unit and a storage unit to execute:

processing of storing a travel demand including information on a departure point and a destination of a traveler in the storage unit;

individual demand estimation processing of creating, based on the travel demand, an individual demand of the traveler who travels using at least one transportation mode of transportation modes of a plurality of traffic services, the individual demand being information on travel of the traveler to be transported by the transportation mode in each section of one or a plurality of sections constituting a travel route from the departure point to the destination;

proposal request processing of calculating, based on the created individual demand, a service level for each of the transportation modes, the service level being an evaluation value of a transportation service in each of the sections provided by the transportation mode, creating proposal request information that is information including the calculated service level for each of the transportation modes, and transmitting the created proposal request information to an information processing device associated with the transportation mode;

proposal reception processing of receiving, from the information processing device, proposal information that is service level response information to the proposal request information;

transportation (service) assignment plan creation processing of creating, for each of the transportation modes, a transportation (service) assignment plan that is information on a service level in each of the sections provided by the transportation mode and that satisfies a service level indicated by the received proposal information; and

assignment result transmission processing of transmitting the created transportation (service) assignment plan to an information processing device associated with the transportation mode related to the transportation (service) assignment plan.

[FIG. 1]

1

# TRAFFIC SERVICE COOPERATION SYSTEM

20

FIRST TRAFFIC
MANAGEMENT SYSTEM

20a

TIMETABLE-BASED
RAILWAY TRAFFIC
MANAGEMENT SYSTEM

20b

SCHEDULED BUS TRAFFIC
MANAGEMENT SYSTEM

10

OPERATION PLAN
CREATION SYSTEM

5

30

SECOND TRAFFIC
MANAGEMENT SYSTEM

30a

OPERATION-INTERVAL-
BASED RAILWAY TRAFFIC
MANAGEMENT SYSTEM

TRANSPORTA-
TION MODE

30b

ON-DEMAND
BUS SERVICE TRAFFIC
MANAGEMENT SYSTEM

TRANSPORTA-
TION MODE

30c

TAXI TRAFFIC
MANAGEMENT SYSTEM

TRANSPORTA-
TION MODE

30d

MICRO-MOBILITY
MANAGEMENT SYSTEM

TRANSPORTA-
TION MODE

ADJUSTMENT MARGIN
MANAGEMENT SYSTEM

40

SHUTTLE BUS TRAFFIC
MANAGEMENT SYSTEM

TRANSPORTA-
TION MODE

BENEFICIARY USE SYSTEM

50

ROUTE
GUIDANCE SYSTEM

[FIG. 2]

10 — OPERATION PLAN CREATION SYSTEM

102 — STORAGE UNIT

131 — TRAVEL DEMAND PREDICTION PROGRAM
133 — INDIVIDUAL DEMAND ESTIMATION PROGRAM
135 — PROPOSAL REQUEST PROGRAM
137 — PROPOSAL RECEPTION PROGRAM
139 — TRANSPORTATION (SERVICE) ASSIGNMENT PLAN CREATION PROGRAM
141 — ASSIGNMENT RESULT TRANSMISSION PROGRAM
200 — TRAVEL DEMAND DATA
300 — INDIVIDUAL TRAVEL DEMAND DATA
400 — PROPOSAL REQUEST INFORMATION LIST
500 — PROPOSAL INFORMATION LIST
600 — TRANSPORTATION (SERVICE) ASSIGNMENT DATA

101 — ARITHMETIC PROCESSING UNIT
103 — COMMUNICATION UNIT
104 — INPUT UNIT
105 — OUTPUT UNIT

700 — OPERATION RECORD DATABASE
800 — TRANSPORTATION (SERVICE) ASSIGNMENT RECORD DATABASE

[FIG. 3]

[FIG. 4]

FIRST PROPOSAL REQUEST
INFORMATION (TAXI)

| | |
|---|---|
| TRANSMISSION SOURCE SYSTEM ID | SYS-01 |
| PROPOSAL REQUEST INFORMATION ID | RQ1 |
| PROPOSAL DEADLINE | 8:55 |
| VEHICLE ARRANGE-MENT AREA ID | AR1 |
| REFERENCE TIME | 10:00 |
| DESIRED STANDBY NUMBER | 3 |

[FIG. 5]

SECOND PROPOSAL REQUEST INFORMATION
(ON-DEMAND BUS SERVICE)

430

| | |
|---|---|
| TRANSMISSION SOURCE SYSTEM ID | SYS-01 |
| PROPOSAL REQUEST INFORMATION ID | RQ3 |
| PROPOSAL DEADLINE | 8:55 |
| DEPARTURE AREA ID | AR2 |
| ARRIVAL AREA ID | AR3 |
| DEPARTURE TIME | 10:00 |
| DESIRED TRANSPORTATION PASSENGER NUMBER | 4 |

431
433
435
437
439
441
443

[FIG. 6]

THIRD PROPOSAL REQUEST
INFORMATION (RAILWAY)

450

| | |
|---|---|
| TRANSMISSION SOURCE SYSTEM ID | SYS-01 |
| PROPOSAL REQUEST INFORMATION ID | RQ5 |
| PROPOSAL DEADLINE | 8:55 |
| REFERENCE STATION ID | ST2 |
| START TIME | 10:00 |
| END TIME | 12:00 |
| DESIRED OPERATION INTERVAL | 4 MINUTES |

451
453
455
457
459
461
463

[FIG. 7]

FIRST PROPOSAL INFORMATION (TAXI)

510

| | |
|---|---|
| TRANSMISSION SOURCE SYSTEM ID | SYS-T03 |
| PROPOSAL INFORMATION ID | PR1 |
| PROPOSAL REQUEST INFORMATION ID | RQ1 |
| VEHICLE ARRANGE-MENT AREA ID | AR1 |
| MEASUREMENT START TIME | 9:55 |
| MEASUREMENT END TIME | 10:05 |
| MINIMUM STANDBY NUMBER | 2 |
| MAXIMUM STANDBY NUMBER | 4 |

[FIG. 8]

SECOND PROPOSAL INFORMATION
(ON-DEMAND BUS SERVICE)

530

| | |
|---|---|
| TRANSMISSION SOURCE SYSTEM ID | SYS-B02 |
| PROPOSAL INFORMATION ID | PR1 |
| EXCLUSIVE PROPOSAL INFORMATION ID | PR2,PR3 |
| PROPOSAL REQUEST INFORMATION ID | RQ3,RQ4 |
| TRAVEL AREA ID | AR2,AR3,AR4 |
| PLANNED DEPARTURE TIME | 10:05,10:12,10:18 |
| MAXIMUM DELAY TIME | 5 MINUTES |
| PASSENGER CAPACITY | 15 |

[FIG. 9]

THIRD PROPOSAL INFORMATION (RAILWAY)

| | |
|---|---|
| TRANSMISSION SOURCE SYSTEM ID | SYS-R02 |
| PROPOSAL INFORMATION ID | PR1 |
| PROPOSAL REQUEST INFORMATION ID | RQ5 |
| REFERENCE STATION ID | ST2 |
| MEASUREMENT START TIME | 10:00 |
| MEASUREMENT END TIME | 12:00 |
| MAXIMUM OPERATION INTERVAL | 5 MINUTES |
| AVERAGE OPERATION INTERVAL | 4 MINUTES |

550

[FIG. 10]

FIRST ADOPTION INFORMATION (TAXI)

| | |
|---|---|
| TRANSMISSION SOURCE SYSTEM ID | SYS-01 |
| PROPOSAL ADOPTION INFORMATION ID | RQ1 |
| PROPOSAL INFORMATION ID | PR1 |
| VEHICLE ARRANGEMENT AREA ID | AR1 |
| MEASUREMENT START TIME | 9:55 |
| MEASUREMENT END TIME | 10:05 |
| MINIMUM STANDBY NUMBER | 2 |
| DESIRED STANDBY NUMBER | 3 |

610

[FIG. 11]

SECOND ADOPTION INFORMATION
(ON-DEMAND BUS SERVICE)

630

| | |
|---|---|
| TRANSMISSION SOURCE SYSTEM ID | SYS-01 |
| PROPOSAL ADOPTION INFORMATION ID | RQ3 |
| PROPOSAL INFORMATION ID | PR1 |
| DEPARTURE AREA ID | AR2 |
| ARRIVAL AREA ID | AR3 |
| PLANNED DEPARTURE TIME | 10:05 |
| MAXIMUM DELAY TIME | 5 MINUTES |
| DESIRED TRANSPORTATION PASSENGER NUMBER | 3 |

631
633
635
637
639
641
643
645

[FIG. 12]

THIRD ADOPTION INFORMATION (RAILWAY)

650

| | |
|---|---|
| TRANSMISSION SOURCE SYSTEM ID | SYS-01 |
| PROPOSAL ADOPTION INFORMATION ID | RQ5 |
| PROPOSAL INFORMATION ID | PR1 |
| REFERENCE STATION ID | ST2 |
| MEASUREMENT START TIME | 10:00 |
| MEASUREMENT END TIME | 12:00 |
| MAXIMUM OPERATION INTERVAL | 5 MINUTES |
| DESIRED OPERATION INTERVAL | 4 MINUTES |

651
653
655
657
659
661
663
665

[FIG. 13]

s100

```
┌──────────────────────────────────┐
│      START OPERATION PLAN        │
│      CREATION PROCESSING         │
└──────────────────────────────────┘
                │
                ▼
┌──────────────────────────────────┐   s101
│       PREDICT TRAVEL DEMAND       │
└──────────────────────────────────┘
                │
                ▼
┌──────────────────────────────────┐   s103
│       INDIVIDUAL DEMAND           │
│       ESTIMATION PROCESSING       │
└──────────────────────────────────┘
                │
                ▼
┌──────────────────────────────────┐   s105
│     PROPOSAL REQUEST PROCESSING   │
└──────────────────────────────────┘
                │
                ▼
┌──────────────────────────────────┐   s107
│     RECEIVE PROPOSAL INFORMATION  │
└──────────────────────────────────┘
                │
                ▼
┌──────────────────────────────────┐   s109
│  CREATE OPTIMAL TRANSPORTATION    │
│  (SERVICE) ASSIGNMENT PLAN BASED ON│
│  PROPOSAL INFORMATION INCLUDING SLA│
│ (TRANSPORTATION (SERVICE) ASSIGNMENT│
│   PLAN CREATION PROCESSING)       │
└──────────────────────────────────┘
                │
                ▼
┌──────────────────────────────────┐   s111
│  UPDATE TRANSPORTATION (SERVICE)  │
│  ASSIGNMENT RECORD DATABASE       │
└──────────────────────────────────┘
                │
                ▼
┌──────────────────────────────────┐   s113
│  TRANSMIT ADOPTION INFORMATION    │
│  TO EACH PROPOSAL SOURCE          │
└──────────────────────────────────┘
                │
                ▼
┌──────────────────────────────────┐
│      END OPERATION PLAN           │
│      CREATION PROCESSING          │
└──────────────────────────────────┘
```

[FIG. 14]

s103

START INDIVIDUAL DEMAND
ESTIMATION PROCESSING

INITIALIZE ESTIMATED VALUE OF INDIVIDUAL
DEMAND OF EACH TRAVEL MODE — s201

REPEAT FOR EACH TRAVEL
DEMAND (FROM HERE) — s203

OBTAIN PASSENGER BEHAVIOR MODEL
TO BE APPLIED — s205

CALCULATE ROUTE CANDIDATE BASED ON
DEPARTURE POINT AND DESTINATION — s207

CALCULATE PROBABILITY AT WHICH
EACH TRAVEL MODE INCLUDED IN ROUTE
CANDIDATE IS TO BE USED BASED ON
PASSENGER BEHAVIOR MODEL — s209

ADD CALCULATED PROBABILITY TO
ESTIMATED VALUE OF INDIVIDUAL DEMAND
OF EACH TRAVEL MODE — s211

REPEAT FOR EACH TRAVEL
DEMAND (UP TO HERE) — s213

ROUND UP ESTIMATED VALUE OF INDIVIDUAL
DEMAND OF EACH TRAVEL MODE TO INTEGER — s215

END INDIVIDUAL DEMAND
ESTIMATION PROCESSING

[FIG. 15]

| | SCHEDULED BUS | ON-DEMAND BUS SERVICE | TAXI |
|---|---|---|---|
| PASSENGER BEHAVIOR MODEL (1) | 0.9 | 0.1 | 0.0 |
| PASSENGER BEHAVIOR MODEL (2) | 0.5 | 0.1 | 0.4 |
| PASSENGER BEHAVIOR MODEL (3) | 0.1 | 0.2 | 0.7 |

[FIG. 16]

```
                                              ⌒ s105
      ╭─────────────────────╮
      │   START PROPOSAL     │
      │  REQUEST PROCESSING  │
      ╰─────────────────────╯
                │
                ▼                    ⌒ s301
      ┌─────────────────────┐
      │ INITIALIZE PROPOSAL REQUEST │
      │    INFORMATION LIST   │
      └─────────────────────┘
                │
                ▼                    ⌒ s303
     ╱──────────────────────────────╲
    │  REPEAT FOR EACH PIECE OF INDIVIDUAL │
    │   DEMAND INFORMATION (FROM HERE)     │
     ╲──────────────────────────────╱
                │
                ▼
        ⟨ INDIVIDUAL DEMAND INFORMATION
          DIRECTED FOR A PLURALITY
            OF PROVIDERS? ⟩
     s305                        YES
              NO                          ⌒ s309
```

INDIVIDUAL DEMAND INFORMATION DIRECTED FOR A PLURALITY OF PROVIDERS?

s305

NO

**s307** CONVERT INDIVIDUAL DEMAND INFORMATION INTO PROPOSAL REQUEST INFORMATION AND ADD CONVERTED PROPOSAL REQUEST INFORMATION TO PROPOSAL REQUEST INFORMATION LIST

YES

**s309** SUBDIVIDE INDIVIDUAL DEMAND INFORMATION, CONVERT EACH SUBDIVIDED INDIVIDUAL DEMAND INFORMATION INTO PROPOSAL REQUEST INFORMATION, AND ADD CONVERTED PROPOSAL REQUEST INFORMATION TO PROPOSAL REQUEST INFORMATION LIST

**s311** CREATE DUMMY INDIVIDUAL DEMAND INFORMATION, CONVERT DUMMY INDIVIDUAL DEMAND INFORMATION INTO PROPOSAL REQUEST INFORMATION, AND ADD CONVERTED PROPOSAL REQUEST INFORMATION TO PROPOSAL REQUEST INFORMATION LIST

**s313** REPEAT FOR EACH PIECE OF DEMAND INFORMATION (UP TO HERE)

**s315** TRANSMIT PROPOSAL REQUEST INFORMATION INCLUDED IN PROPOSAL REQUEST INFORMATION LIST

END PROPOSAL REQUEST PROCESSING

[FIG. 17]

```
                              ┌─────────────────────────────────────┐
                              │ START TRANSPORTATION (SERVICE)       │  s109
                              │ ASSIGNMENT PLAN CREATION PROCESSING   │
                              └─────────────────────────────────────┘
                                              │
                              ┌─────────────────────────────────────┐
                              │    SET OPTION OF TRAVEL MODE         │  s401
                              └─────────────────────────────────────┘
                                              │
                              ┌─────────────────────────────────────┐
                              │    CALCULATE ROUTE CANDIDATE         │  s403
                              └─────────────────────────────────────┘
                                              │
                              ┌─────────────────────────────────────┐
                              │    REGISTER CONSTRAINT               │  s405
                              └─────────────────────────────────────┘
                                              │
                              ┌─────────────────────────────────────┐
                              │    REGISTER OBJECTIVE FUNCTION       │  s407
                              └─────────────────────────────────────┘
                                              │
                              ┌─────────────────────────────────────┐
                              │    OBTAIN OPTIMAL SOLUTION           │  s409
                              └─────────────────────────────────────┘
                                              │
                VIOLATION AMOUNT AGAINST SERVICE LEVEL IS                 s411
          NO    WITHIN ALLOWABLE RANGE? OR TRAVEL MODE SERVING
                AS ADJUSTMENT MARGIN IS ADDED AS OPTION?
                                              │ YES
                              ┌─────────────────────────────────────┐
                              │ END TRANSPORTATION (SERVICE)         │
                              │ ASSIGNMENT PLAN CREATION PROCESSING  │
                              └─────────────────────────────────────┘
```

[FIG. 18]

$$
\begin{array}{c}
 & j_1 & j_2 & j_3 & \cdots & j_{|\mathcal{R}|} \\
a_1 \\
a_2 \\
a_3 \\
\vdots \\
a_{|\mathcal{A}|} \\
\\
p_1 \\
p_2 \\
p_3 \\
\vdots \\
p_{|\mathcal{P}|} \\
\\
m_1 \\
m_2 \\
m_3 \\
\vdots \\
m_{|\mathcal{M}|} \\
\\
k_1 \\
\vdots \\
k_{|\mathcal{K}|}
\end{array}
\begin{pmatrix}
1 & 1 & 0 & \cdots & 0 \\
0 & 0 & 1 & \cdots & 0 \\
0 & 0 & 0 & \cdots & 0 \\
\vdots & \vdots & \vdots & \ddots & \vdots \\
0 & 0 & 0 & \cdots & 1 \\
\\
1 & 0 & 1 & \cdots & 0 \\
0 & 1 & 0 & \cdots & 0 \\
1 & 0 & 0 & \cdots & 0 \\
\vdots & \vdots & \vdots & \ddots & \vdots \\
0 & 0 & 1 & \cdots & 1 \\
\\
1 & 0 & 0 & \cdots & 0 \\
0 & 0 & 1 & \cdots & 0 \\
0 & 1 & 0 & \cdots & 0 \\
\vdots & \vdots & \vdots & \ddots & \vdots \\
0 & 0 & 1 & \cdots & 1 \\
\\
f_1(j_1) & f_1(j_2) & f_1(j_3) & \cdots & f_1(j_{|\mathcal{R}|}) \\
\vdots & \vdots & \vdots & \ddots & \vdots \\
f_{|\mathcal{K}|}(j_1) & f_{|\mathcal{K}|}(j_2) & f_{|\mathcal{K}|}(j_3) & \cdots & f_{|\mathcal{K}|}(j_{|\mathcal{R}|})
\end{pmatrix}
$$

| INTERNATIONAL SEARCH REPORT | International application No. |
| | PCT/JP2022/012382 |

**A.    CLASSIFICATION OF SUBJECT MATTER**

*G08G 1/00*(2006.01)i
FI:   G08G1/00 D

According to International Patent Classification (IPC) or to both national classification and IPC

**B.    FIELDS SEARCHED**

Minimum documentation searched (classification system followed by classification symbols)

G08G1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2022-37515 A (HITACHI, LTD.) 09 March 2022 (2022-03-09) entire text, all drawings | 1-14 |
| A | JP 2018-84855 A (HITACHI, LTD.) 31 May 2018 (2018-05-31) entire text, all drawings | 1-14 |
| A | JP 2022-6482 A (HITACHI, LTD.) 13 January 2022 (2022-01-13) entire text, all drawings | 1-14 |
| A | JP 2002-26971 A (TOSHIBA TEC CORP.) 20 September 2002 (2002-09-20) entire text, all drawings | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/012382**

| Patent document cited in search report | | | Publication date (day/month/year) | Patent family member(s) | Publication date (day/month/year) |
|---|---|---|---|---|---|
| JP | 2022-37515 | A | 09 March 2022 | (Family: none) | |
| JP | 2018-84855 | A | 31 May 2018 | (Family: none) | |
| JP | 2022-6482 | A | 13 January 2022 | (Family: none) | |
| JP | 2002-26971 | A | 20 September 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002269671 A